# EUROPEAN PATENT APPLICATION

(11) **EP 4 757 016 A1**
(43) Date of publication of application: **10.06.2026**
(21) Application number: 23949524.5
(22) Date of filing: 12.10.2023
(51) Int. Cl.: H01M 50/176, H01M 50/552

(54) **BATTERY CELL, BATTERY AND ELECTRIC DEVICE**

(30) Priority: 23.08.2023 CN 202311070663
(71) Applicant: Contemporary Amperex Technology Co., Limited, Ningde, Fujian 352100 (CN)
(72) Inventor: WU, Kai, Ningde, Fujian 352100 (CN); YE, Zetao, Ningde, Fujian 352100 (CN); CHEN, Congsheng, Ningde, Fujian 352100 (CN); HUANG, Biao, Ningde, Fujian 352100 (CN); LIN, Wenfa, Ningde, Fujian 352100 (CN)
(74) Representative: Gong, Jinping
(86) International application number: PCT/CN2023/124233
(87) International publication number: WO 2025/039341

(57) **Abstract**

A cell, a battery, and an electric device belong to the field of battery technologies. The cell includes a case and a terminal body. The case defines an accommodating cavity. The case defines an accommodating cavity. The terminal body is arranged in the case. A liquid injection channel configured to communicate the accommodating cavity with an exterior of the case is formed on the terminal body, and the liquid injection channel includes an accommodating groove and a through hole running through a groove wall of the accommodating groove.

## Description

### CROSS-REFERENCE TO RELATED APPLICATIONS

This application is provided based on and claims priority to Chinese Patent Application No. 202311070663.6 filed on August 23, 2023, which is incorporated herein by reference in its entirety.

### TECHNICAL FIELD

This application relates to the field of battery technologies, and in particular, to a cell, a battery, and an electric device.

### BACKGROUND

In recent years, new energy vehicles have been rapidly developed. In the field of electric vehicles, a power battery, as a power source of an electric vehicle, plays an irreplaceable and important role. The power battery includes a plurality of cells. However, the cells need to be improved in terms of use performance and manufacturability.

### SUMMARY

Embodiments of this application provide a cell, a battery, and an electric device, to improve use performance and manufacturability of the cell.

According to a first aspect, an embodiment of this application provides a cell, including a case and a terminal body. The case defines an accommodating cavity. The terminal body is arranged in the case. A liquid injection channel configured to communicate the accommodating cavity with an exterior of the case is formed on the terminal body, and the liquid injection channel includes an accommodating groove and a through hole running through a groove wall of the accommodating groove.

In the foregoing technical solution, the terminal body is provided with the liquid injection channel through which an electrolytic solution can be injected into the accommodating cavity, to implement electrolytic solution injection from the terminal body. There is no need to provide the liquid injection channel separately on the case of the cell. Therefore, the liquid injection channel does not separately occupy space of the case. The terminal body does not need to be reduced in size to avoid the liquid injection channel. Therefore, the area and the flow area of the terminal body can be increased without increasing the size of the case, which facilitates reducing the flow resistance and improving the current passing efficiency of the cell. In addition, the area of the terminal body is increased, which further facilitates assembly and connection between the terminal body and the case. In addition, because the size of the case does not need to be enlarged to enlarge the area of the terminal body, it is beneficial to miniaturization and lightweight of the case. In addition, because there is no need to provide the liquid injection channel separately on the case of the cell and perform special processing on the case, it is beneficial to reducing structural complexity and processing difficulty of the case. In addition, there is no need to thicken the case partially for welding a sealing pin on the case, so that the structure and processing of the case can be further simplified, and there is also no need to thicken the case entirely for welding a sealing pin on the case, which, therefore, is conducive to meeting thinning and lightweight requirements of the case, is conducive to improving the energy density of the cell, and is conducive to reducing the weight and material costs of the case. In addition, arranging the liquid injection channel on the terminal body facilitates manufacturing and processing of the liquid injection channel, so that the size, the shape, and the like of the liquid injection channel can easily meet design requirements and application requirements, which is conducive to reducing difficulty in processing the liquid injection channel and reducing costs of the liquid injection channel. In addition, because the liquid injection channel includes the accommodating groove and the through hole running through the groove wall of the accommodating groove, the liquid injection channel can communicate the accommodating cavity with the exterior of the case, thereby meeting a liquid injection requirement. In addition, because the liquid injection channel includes the accommodating groove, the liquid injection channel has a large buffer space, and can function to buffer the electrolytic solution to some extent, which is conducive to reducing the possibility of spilling and overflowing the electrolytic solution during liquid injection or use of the cell.

In some embodiments, the accommodating groove includes a first accommodating groove with a groove opening open toward a direction away from the accommodating cavity, and the through hole includes a liquid passage hole running through a groove wall on a side of the first accommodating groove close to the accommodating cavity.

In the foregoing technical solution, the first accommodating groove can function to buffer the electrolytic solution, to alleviate the problems, such as spilling and overflowing, of the electrolytic solution. In addition, the side wall of the first accommodating groove may prevent the electrolytic solution from spilling out to some extent, thereby reducing contamination of the electrolytic solution to the outside, and facilitating rapid liquid injection. In addition, a liquid injection port can be flexibly arranged. For example, an outlet of the liquid injection port can be made large. For example, the outlet of the liquid injection port is arranged to match the groove opening of the first accommodating groove, which is conducive to further improving the liquid injection efficiency.

In some embodiments, the accommodating groove further includes a second accommodating groove with a groove opening open toward a direction facing the accommodating cavity, the second accommodating groove is located on a side of the first accommodating groove close to the accommodating cavity, and the liquid passage hole runs through a groove wall on a side of the second accommodating groove away from the accommodating cavity to communicate the first accommodating groove with the second accommodating groove.

In the foregoing technical solution, the second accommodating groove is arranged, so that a gas generated in the accommodating cavity or the electrolytic solution having a tendency to overflow can enter the second accommodating groove, and the second accommodating groove can implement a buffer function, to improve the operational reliability of the cell. In addition, arranging the second accommodating groove can increase the height of the liquid passage hole during liquid injection. When the injection height of the electrolytic solution is level with the lower end of the liquid passage hole, it is beneficial to increasing a total injection volume of the electrolytic solution and improving the cycle life of the cell.

In some embodiments, the cell includes a battery core assembly, where the battery core assembly includes an active material coating portion accommodated in the accommodating cavity and a conductive portion connected to the active material coating portion; a communication hole communicating the first accommodating groove with the accommodating cavity is formed on the terminal body; one or more communication holes are provided, and the at least one communication hole is used as the liquid passage hole; and the conductive portion is penetrated through the at least one communication hole to be at least partially accommodated in the first accommodating groove.

In the foregoing technical solution, at least a part of the conductive portion is accommodated in the first accommodating groove, so that the at least a part of the conductive portion occupies space in the first accommodating groove, which can reduce space occupied by the conductive portion in the accommodating cavity, and save space in the accommodating cavity to accommodate the active material coating portion with a larger volume, which is conducive to improving the energy density of the cell, or reducing the size of the cell without changing the energy density of the cell.

In some embodiments, the communication hole through which the conductive portion is penetrated is a first communication hole, and the first communication hole is used as the liquid passage hole.

In the foregoing technical solution, when at least the first communication hole is used as the liquid passage hole, the first communication hole also implements a liquid passage function, that is, after the conductive portion is penetrated through the first communication hole, the first communication hole can be used for the electrolytic solution to pass through. In this case, at least the first communication hole can be used for the electrolytic solution to pass through, so that whether to further provide a communication hole through which the conductive portion is not penetrated needs to be chosen based on requirements, which is conducive to reducing a total quantity of provided communication holes, thereby simplifying the structure and processing of the terminal body and improving the structural strength of the terminal body.

In some embodiments, the communication hole through which the conductive portion is penetrated is a first communication hole, a plurality of communication holes are provided and further include at least one second communication hole through which the conductive portion is not penetrated, and at least the second communication hole is used as the liquid passage hole.

In the foregoing technical solution, when at least the second communication hole is used as the liquid passage hole, at least the second communication hole can be used for the electrolytic solution to pass through. In this case, there is no need to set a pore diameter of the first communication hole or a quantity of first communication holes to be larger for the electrolytic solution to pass through the first communication hole, there is also no need to set a size of the conductive portion to be smaller for the electrolytic solution to pass through the first communication hole, and it is only needed to design the size of the first communication hole to be slightly greater than the size of the conductive portion to enable the conductive portion to pass, which can alleviate the problem that impurities and the like fall into the accommodating cavity from a gap between the conductive portion and the first communication hole, can also alleviate the problem that partial strength of the terminal body is weak due to an excessively large size of the first communication hole, and can also enlarge the size of the conductive portion, which is conducive to improving the current passing efficiency. In addition, because the electrolytic solution is not affected by the conductive portion when the electrolytic solution passes through the second communication hole, the liquid injection efficiency can be improved, and the electrolytic solution is unlikely to cause problems, such as contamination and corrosion, to the conductive portion.

In some embodiments, the terminal body is formed into an elongated structure, and the communication hole through which the conductive portion is penetrated is formed into an elongated hole whose length direction extends from one end of a length of the terminal body to an other end of the length.

In the foregoing technical solution, the space of the terminal body can be fully used, to enlarge, as much as possible, the length of the communication hole through which the conductive portion is penetrated, so that the communication hole through which the conductive portion is penetrated can be penetrated through by a conductive portion with a larger size. Therefore, it is beneficial to increase the size of the conductive portion, thereby improving the current passing efficiency. When the communication hole through which the conductive portion is penetrated is used as the liquid passage hole, the length of the communication hole through which the conductive portion is penetrated is enlarged, which is further conducive to improving the liquid injection efficiency.

In some embodiments, the cell includes a battery core assembly, where the battery core assembly includes an active material coating portion accommodated in the accommodating cavity and a conductive portion connected to the active material coating portion; a communication hole communicating the first accommodating groove with the accommodating cavity is formed on the terminal body; one or more communication holes are provided, and the at least one communication hole is used as the liquid passage hole; and the conductive portion is connected to a wall surface on a side of the terminal body facing the accommodating cavity.

In the foregoing technical solution, the conductive portion is connected to the wall surface on the side of the terminal body facing the accommodating cavity, so that the conductive portion does not penetrate through the communication hole and does not extend into the first accommodating groove, thereby reducing contamination and corrosion caused by the injected electrolytic solution to a connecting portion formed by connecting the conductive portion to the terminal body.

In some embodiments, the terminal body is formed into an elongated structure, and the first accommodating groove is formed into an elongated groove whose length direction extends from one end of a length of the terminal body to an other end of the length.

In the foregoing technical solution, it is conducive to fully using space of the terminal body, to enlarge the size of the first accommodating groove, improve the liquid injection efficiency, and facilitate the flared design of the liquid injection port. For example, the outlet end of the liquid injection port is arranged to match the groove opening of the first accommodating groove, which is conducive to further improving the liquid injection efficiency.

In some embodiments, the groove opening of the first accommodating groove is in a flared form.

In the foregoing technical solution, matching between the first accommodating groove and the liquid injection port is facilitated, so that the liquid injection port can conveniently extend into the groove opening of the first accommodating groove, and the liquid injection port can be limited, thereby improving the matching stability between the liquid injection port and the groove opening of the first accommodating groove, and reducing a probability of liquid leakage during liquid injection.

In some embodiments, the cell further includes: a terminal cover plate, where the terminal cover plate covers the terminal body and seals the groove opening of the first accommodating groove.

In the foregoing technical solution, after the liquid injection, a terminal cover plate can be configured to cover the terminal body, to use the terminal cover plate to seal the groove opening of the first accommodating groove on the terminal body, so that the liquid injection channel is in a sealed state, the electrolytic solution is prevented from spilling out, and external foreign matter is prevented from entering the cell, thereby improving reliability of the cell.

In some embodiments, at least a part of the terminal cover plate is embedded in the first accommodating groove.

In the foregoing technical solution, at least a part of the terminal cover plate is embedded in the first accommodating groove, so that space occupied by the terminal cover plate outside the terminal body can be reduced, thereby improving structural compactness.

In some embodiments, an edge of the terminal cover plate has an overlapping portion, and the overlapping portion overlaps a side of the terminal body away from the accommodating cavity.

In the foregoing technical solution, matching and connection between the terminal cover plate and the terminal body are facilitated. In addition, when the overlapping portion is used for welding to the terminal body, and the terminal body is provided with a liquid passage hole, the overlapping portion may be away from the liquid passage hole. When the electrolytic solution overflows through the liquid passage hole, the electrolytic solution can be away from a welding position between the overlapping portion and the terminal body, thereby alleviating the problems, such as corrosion and contamination, caused to the welding position.

In some embodiments, a surface on a side of the terminal body away from the accommodating cavity has a sink arranged around the first accommodating groove, and at least a part of the overlapping portion is embedded in the sink.

In the foregoing technical solution, the sink may be used to implement a positioning function, thereby improving assembly efficiency between the terminal body and the terminal cover plate. In addition, the sink may be used to implement a limiting function to some extent, thereby improving stability and reliability of the matching between the terminal body and the terminal cover plate. In addition, by arranging the sink, the terminal cover plate can be further embedded into the terminal body, so that the terminal cover plate protrudes less or does not protrude from the terminal body, which is conducive to reducing space occupied outside the terminal body.

In some embodiments, a fitting gap is provided between the overlapping portion and a side wall of the sink, and a dimension of the fitting gap at an end away from the accommodating cavity is less than 0.05 mm.

In the foregoing technical solution, the overlapping portion of the terminal cover plate can be smoothly assembled with the sink of the terminal body, and in addition, the fitting gap between the overlapping portion and the terminal body is not excessively large. When the overlapping portion and the terminal body are connected by welding, a welding yield between the overlapping portion and the terminal body can be improved.

In some embodiments, the cell further includes a first sealing structure, where the first sealing structure seals the liquid passage hole.

In the foregoing technical solution, the first sealing structure is arranged to seal the liquid passage hole, so that the liquid injection channel can be sealed, the electrolytic solution is prevented from spilling out, and external foreign matter is prevented from entering the cell, thereby improving reliability of the cell.

In some embodiments, the accommodating groove includes a third accommodating groove with a groove opening open toward a direction away from the accommodating cavity, and the through hole includes an injection hole running through a groove wall on a side of the third accommodating groove away from the accommodating cavity.

In the foregoing technical solution, the third accommodating groove can function to buffer the electrolytic solution, and a side wall of the third accommodating groove can prevent the electrolytic solution from spilling out, to facilitate rapid liquid injection. In addition, the height of the injection hole may be increased. When the injection hole is blocked, a gas generated in the accommodating cavity or the electrolytic solution can enter the third accommodating groove, and the third accommodating groove can implement a buffer function, to improve the operational reliability of the cell. In addition, when the injection height of the electrolytic solution is level with the lower end of the injection hole, because the third accommodating groove is further provided below the injection hole, the injection height of the electrolytic solution can be increased, which is conducive to increasing the total injection amount of the electrolytic solution, thereby improving the cycle life of the cell.

In some embodiments, a flow area at a liquid inlet end of the injection hole is greater than a flow area at a liquid outlet end of the injection hole.

In the foregoing technical solution, when the electrolytic solution is injected into the injection hole, the electrolytic solution flows in a direction from the liquid inlet end to the liquid outlet end, setting the flow area at the liquid inlet end of the injection hole to be greater than a flow area at the liquid outlet end of the injection hole is conducive to improving the liquid injection efficiency and alleviates the problem of electrolytic solution overflow. In addition, when the injection hole matches the liquid injection port, because the flow area at the liquid inlet end of the injection hole is larger, which facilitates injecting the liquid injection port into the injection hole, thereby helping improve the liquid injection efficiency.

In some embodiments, the cell further includes a second sealing structure, where the second sealing structure seals the injection hole.

In the foregoing technical solution, the second sealing structure is arranged to seal the injection hole, so that the liquid injection channel can be sealed, the electrolytic solution is prevented from spilling out, and external foreign matter is prevented from entering the cell, thereby improving reliability of the cell. In addition, when the flow area at the liquid inlet end of the injection hole is greater than the flow area at the liquid outlet end of the injection hole, quick assembly between the second sealing structure and the injection hole is further facilitated.

In some embodiments, the cell includes a battery core assembly, where the battery core assembly includes an active material coating portion accommodated in the accommodating cavity and a conductive portion connected to the active material coating portion; and at least a part of the conductive portion is accommodated in the third accommodating groove and is connected to a groove wall on a side of the third accommodating groove away from the accommodating cavity.

In the foregoing technical solution, because at least a part of the conductive portion can be accommodated in the third accommodating groove, which can reduce space occupied by the conductive portion in the accommodating cavity, and save space in the accommodating cavity to accommodate the active material coating portion with a larger volume, which is conducive to improving the energy density of the cell, or reducing the size of the cell without changing the energy density of the cell.

In some embodiments, the case includes a first case wall, and the terminal body is arranged on the first case wall, where the first case wall is an integrally formed cover plate, or the first case wall and at least one second case wall are integrally formed, and the second case wall extends toward a side in a thickness direction of the first case wall.

In the foregoing technical solution, the position of the terminal body can be flexibly designed, to broaden the application range of the cell.

According to a second aspect, an embodiment of this application further provides a battery, including a busbar component and the cell according to any one of the foregoing solutions, where a plurality of cells are provided, and at least two cells are electrically connected by the busbar component.

In the foregoing technical solutions, because the performance and manufacturability of the cell according to this embodiment of this application are both improved, it is conducive to improving the performance and manufacturability of the battery.

According to a third aspect, an embodiment of this application further provides an electric device, including the battery according to any one of the foregoing solutions.

In the foregoing technical solution, because performance of the battery is improved, it is beneficial to improving the operational power performance of the electric device.

### BRIEF DESCRIPTION OF THE DRAWINGS

To illustrate the technical solutions of embodiments of this application more clearly, the following briefly introduces the accompanying drawings required in embodiments of this application. Apparently, the accompanying drawings described below are only some embodiments of this application. For a person of ordinary skill in the art, other drawings can also be obtained according to the drawings without any creative work.
FIG. 1 is a schematic structural diagram of a vehicle according to some embodiments of this application;
FIG. 2 is a structural exploded view of a battery according to some embodiments of this application;
FIG. 3 is a schematic structural diagram of a cell according to some embodiments of this application;
FIG. 4 is a schematic diagram of an orthographic projection of the cell shown in FIG. 3 with a terminal cover plate opened;
FIG. 5 is a cross-sectional view along a line N-N in FIG. 4;
FIG. 6 is a partially enlarged view of FIG. 5;
FIG. 7 is a cross-sectional view of a cell according to some embodiments of this application;
FIG. 8 is a schematic diagram of matching between a terminal body and a conductive portion according to some embodiments of this application;
FIG. 9 is a cross-sectional view along a line P-P in FIG. 8;
FIG. 10 is a schematic diagram of matching between a terminal body and a conductive portion according to some embodiments of this application;
FIG. 11 is a cross-sectional view along a line Q-Q in FIG. 10;
FIG. 12 is a cross-sectional view along a line R-R in FIG. 10;
FIG. 13 is a schematic diagram of matching between a terminal body and a terminal cover plate according to some embodiments of this application;
FIG. 14 is a cross-sectional view along a line S-S in FIG. 13;
FIG. 15 is a cross-sectional view along a line T-T in FIG. 14;
FIG. 16 is a cross-sectional view of a cell according to some embodiments of this application;
FIG. 17 is a cross-sectional view of a cell according to some embodiments of this application;
FIG. 18 is a cross-sectional view of a cell according to some embodiments of this application;
FIG. 19 is a partial cross-sectional view of a terminal body according to some embodiments of this application;
FIG. 20 is a cross-sectional view of matching between the terminal body shown in FIG. 19 and a second sealing member;
FIG. 21 is a cross-sectional view of matching between the terminal body shown in FIG. 19 and a first sealing member and matching between the terminal body shown in FIG. 19 and a second sealing member;
FIG. 22 is a cross-sectional view of matching between the terminal body shown in FIG. 19 and a first sealing member and matching between the terminal body shown in FIG. 19 and a second sealing member;
FIG. 23 is a partial cross-sectional view of a terminal body according to some embodiments of this application;
FIG. 24 is a partial cross-sectional view of a terminal body according to some embodiments of this application;
FIG. 25 is a cross-sectional view of a cell according to some embodiments of this application; and
FIG. 26 is a schematic diagram of matching between a cell and a busbar component according to some embodiments of this application.

Reference signs: vehicle 1000; first direction X; second direction Y; third direction Z; battery 100; controller 200; motor 300; box 101; first box body 1011; second box body 1012; cell 102; case 1; accommodating cavity 1A; first case wall 11; second case wall 12; terminal body 2; liquid injection channel 2B; accommodating groove 21; first accommodating groove 211; second accommodating groove 212; third accommodating groove 213; communication hole 22; first communication hole 221; second communication hole 222; liquid passage hole 23; injection hole 24; liquid inlet end 24a; liquid outlet end 24b; first hole segment 241; second hole segment 242; third hole segment 243; sink 25; fitting gap 26; outer stopper 271; inner stopper 272; through hole 28; sealing gasket 1023; insulation gasket 1024; first sealing structure 1025; second sealing structure 1026; terminal cover plate 3; overlapping portion 32; first sealing member 4; second sealing member 5; extending portion 51; central portion 52; edge portion 53; avoidance portion 54; avoidance cavity 55; battery core assembly 7; active material coating portion 71; conductive portion 72; busbar component 103.

### DETAILED DESCRIPTION

To make the objectives, technical solutions, and advantages of embodiments of this application clearer, the following clearly describes the technical solutions in the embodiments of this application with reference to the accompanying drawings in the embodiments of this application. Apparently, the described embodiments are some of the embodiments of this application rather than all the embodiments. All other embodiments obtained by a person of ordinary skill in the art based on the embodiments of this application without making creative efforts shall fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include", "have" and any other variants in the specification, claims, and description of accompanying drawings of this application mean to cover the non-exclusive inclusion. The terms "first", "second", and the like in the description and claims of this application or the above drawings are used to distinguish different objects, rather than to describe a specific order or primary and secondary relationship.

In this application, the phase "embodiment" mentioned means that the specific features, structures, or characteristics described with reference to the embodiments can be included in at least one embodiment of this application. The phrase appearing at various positions in this specification may neither necessarily mean a same embodiment, nor mean an independent or optional embodiment exclusive from another embodiment.

In the description of the present application, it should be noted that, unless otherwise explicitly specified or defined, the terms, such as "install", "connect", "connection", and "attach", should be understood in a broad sense. For example, the connection may be a fixed connection, a detachable connection, or an integral connection; or the connection may be a direct connection, an indirect connection through an intermediary, or internal communication between two components. A person of ordinary skill in the art can understand specific meanings of the terms in the present application based on specific situations.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates that the associated objects have an "or" relationship.

In the embodiments of this application, the same reference signs denote the same components, and for the sake of brevity, detailed descriptions of the same components are omitted in different embodiments. It should be understood that the thickness, length, width and other dimensions of various components in the embodiments of this application shown in the drawings, as well as the overall dimensions, such as a thickness, a length, and a width, of the integrated device are only exemplary descriptions, and should not constitute any limitation to this application.

The phrase "plurality of" appearing in this application means two or more (including two).

In the present application, cells may include a lithium-ion secondary battery, a lithium-ion primary battery, a lithium-sulfur battery, a sodium-lithium-ion battery, a sodium-ion battery, or a magnesium-ion battery, etc., which is not limited in the examples of the present application. The cell may be cylindrical, flat, rectangular, or in other shapes, which is also not limited in the embodiments of this application. Cells are generally categorized into three types depending on their packaging manners, including cylindrical cells, rectangular cells, and pouch cells, which are not limited in the embodiments of this application.

A battery mentioned in the embodiments of this application refers to a single physical module including one or more cells to provide a higher voltage and a higher capacity. For example, the battery mentioned in the present application may include a battery module, a battery pack or the like. The battery module generally includes a plurality of cells. The battery pack generally includes a box for packaging one or more cells or one or more battery modules. The box can prevent a liquid or other foreign matter from affecting the charging or discharging of the cells.

The cell includes a case, a battery core assembly, and an electrolytic solution. The case is configured to accommodate the battery core assembly and the electrolytic solution. The battery core assembly includes at least one electrode assembly. The electrode assembly includes a positive electrode plate, a negative electrode plate, and a separator. In addition, the electrode assembly may be a wound structure or a laminated structure. The operation of the cell mainly relies on movement of metal ions between the positive electrode plate and the negative electrode plate.

The positive electrode plate may generally include a positive electrode current collector and a positive electrode active material layer. The positive electrode active material layer is directly or indirectly coated on the positive electrode current collector. The positive electrode current collector uncoated with the positive electrode active material layer protrudes from the positive electrode current collector coated with the positive electrode active material layer. The positive electrode current collector uncoated with the positive electrode active material layer is used as a positive electrode tab. By using the lithium-ion battery as an example, a material of the positive electrode current collector may be aluminum, and a material of the positive electrode active material layer may be lithium cobalt oxide, lithium iron phosphate, ternary lithium, lithium manganese oxide, or the like.

The negative electrode plate may generally include a negative electrode current collector and a negative electrode active material layer. The negative electrode active material layer is directly or indirectly coated on the negative electrode current collector. The negative electrode current collector uncoated with the negative electrode active material layer protrudes from the negative electrode current collector coated with the negative electrode active material layer. The negative electrode current collector uncoated with the negative electrode active material layer is used as a negative electrode tab. A material of the negative electrode current collector may be copper, and a material of the negative electrode active material layer may be carbon, silicon, or the like.

To ensure that no fusing occurs when a large current passes, a plurality of positive electrode tabs are provided and stacked together to form a tab portion of the positive electrode, and a plurality of negative electrode tabs are provided and stacked together to form a tab portion of the negative electrode. Terminals are arranged in the case. The tab portion of the positive electrode is electrically connected to the terminal of the positive electrode, and the tab portion of the negative electrode is electrically connected to the terminal of the negative electrode. For example, the tab portion may be welded to the terminal, to form a direct electrical connection between the tab portion and the terminal. In another example, the battery core assembly may include an adapter. The tab portion is welded to the adapter, and the adapter is welded to the terminal, to form an indirect electrical connection between the tab portion and the terminal.

A material of the separator is not limited, and may be, for example, polypropylene or polyethylene.

In a cell in the related art, a terminal, an explosion-proof valve, and the like are usually arranged on a top lid of a case, and in addition, a liquid injection hole is further provided on the top lid. The liquid injection hole is spaced apart from structural members such as the terminal and the explosion-proof valve. Because the liquid injection hole is separately provided on the top lid and occupies an area of the top lid, an area of the terminal is smaller. If the area of the terminal needs to be enlarged, a size of the top lid needs to be enlarged and a weight of the enlarged top lid is also increased accordingly. Therefore, it is difficult to miniaturize and lightweight the top lid. In addition, because the liquid injection hole needs to be separately processed on the top lid, a structure of the top lid is relatively complex, resulting in high difficulty in processing. The liquid injection hole is not easy to process. In addition, in consideration of sealing, a sealing pin needs to be welded on the top lid to block the liquid injection hole. However, as an energy density of the cell increases, the top lid is made thinner, and the top lid is prone to collapse or welding through at a position at which the sealing pin is welded. To alleviate the problem, a part of the top lid at which the sealing pin is welded is usually thickened, resulting in increased material and manufacturing costs of the top lid, or the top lid needs to be thickened entirely, resulting in a failure in meeting thinning and lightweight requirements of the top lid, which affects improvement of the energy density of the cell.

Therefore, an embodiment of this application provides a cell. The cell includes a case and a terminal body. The case defines an accommodating cavity. The terminal body is arranged in the case. A liquid injection channel configured to communicate the accommodating cavity with an exterior of the case is formed on the terminal body, and the liquid injection channel includes an accommodating groove and a through hole running through a groove wall of the accommodating groove. Therefore, because the liquid injection channel includes the accommodating groove and the through hole running through the groove wall of the accommodating groove, the liquid injection channel can communicate the accommodating cavity with the exterior of the case, thereby meeting a liquid injection requirement. In addition, because the liquid injection channel includes the accommodating groove, the liquid injection channel has a large buffer space, and functions to buffer the electrolytic solution to some extent, which is conducive to reducing the possibility of spilling and overflowing the electrolytic solution during liquid injection or use of the cell.

In addition, the terminal body is provided with the liquid injection channel through which an electrolytic solution can be injected into the accommodating cavity, to implement electrolytic solution injection from the terminal body. There is no need to provide the liquid injection channel separately on the case of the cell. Therefore, the liquid injection channel does not separately occupy space of the case. The terminal body does not need to be reduced in size to avoid the liquid injection channel. Therefore, the area and the flow area of the terminal body can be increased without increasing the size of the case, which facilitates reducing the flow resistance and improving the current passing efficiency of the cell. In addition, the area of the terminal body is increased, which further facilitates assembly and connection between the terminal body and the case. In addition, because the size of the case does not need to be enlarged to enlarge the area of the terminal body, it is beneficial to miniaturization and lightweight of the case. In addition, it is conducive to processing and forming of the liquid injection channel, and is conducive to simplifying a structure and processing of the case are. In addition, there is no need to thicken the case partially for welding a sealing pin on the case, so that the structure and processing of the case can be further simplified, and there is also no need to thicken the case entirely for welding a sealing pin on the case, which, therefore, is conducive to meeting thinning and lightweight requirements of the case, is conducive to improving the energy density of the cell, and is conducive to reducing the weight and material costs of the case.

The embodiment of the present application provides an electrical device using a battery as a power source, which can be but is not limited to mobile phones, tablet computers, laptops, electric toys, electric tools, electric bicycles, electric vehicles, ships, spacecraft, and so on. The electric toy may include a stationary or mobile electric toy, such as a game console, an electric car toy, an electric ship toy, an electric airplane toy and the like. The spacecraft may include an airplane, a rocket, a space shuttle, and a spaceship.

For the convenience of explanation, the following embodiment takes an electrical device in one embodiment of the present application being the vehicle 1000 as an example to explain.

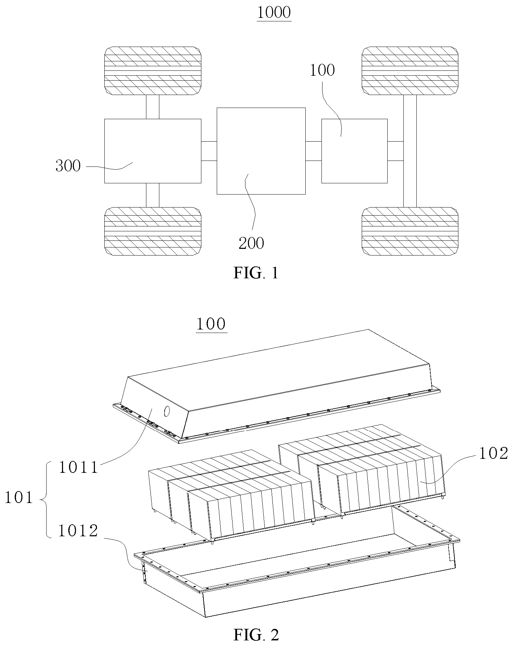

Referring to FIG. 1, FIG. 1 is a schematic structural diagram of a vehicle 1000 according to some embodiments of this application. The vehicle 1000 may be a fuel powered vehicle, a gas powered vehicle, or a new energy vehicle. The new energy vehicle may be a pure electric vehicle, a hybrid electric vehicle, an extended-range vehicle, or the like. A battery 100 is arranged inside the vehicle 1000, and the battery 100 may be arranged at the bottom, the head, or the tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of this application, the battery 100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, FIG. 2 is a structural explosion view of the battery 100 provided in some embodiments of the present application. The battery 100 may include a box 101 and a plurality of cells 102, where the cells 102 are accommodated in the box 101. In the above, the box 101 is used to provide assembly space for the cell 102, and the box 101 can be of various structures. In some embodiments, the box body 101 may include a first box body portion 1011 and a second box body portion 1012, the first box body portion 1011 and the second box body portion 1012 are covered with each other, and the first box body portion 1011 and the second box body portion 1012 together define an assembly space for accommodating cell 102. The second box body 1012 can be in a hollow structure with an opening at one end, the first box body 1011 can be in a plate-shaped structure, and the first box body 1011 is covered on the opening side of the second box body 1012 to jointly define the assembly space by the first box body 1011 and the second box body 1012. The first box body 1011 and the second box body 1012 can also both be in hollow structure with an opening on one side, and the opening side of the first box body 1011 is covered on the opening side of the second box body 1012. Certainly, the box 101 formed by the first box body 1011 and the second box body 1012 may be of a variety of shapes, for example, a cylinder or a cuboid.

In the battery 100, the plurality of cells 102 are arranged, and the plurality of cells 102 may be connected to one another in series, in parallel or in a parallel-series manner, the parallel-series manner indicating that the plurality of cells 102 are connected in both series and parallel. The plurality of cells 102 may be directly connected in series, parallel, or series-parallel, and then a whole formed by the plurality of cells 102 is accommodated in the box body 101. Certainly, the battery 100 may be a whole formed by connecting the plurality of cells 102 in series, parallel, or parallel-series first for combination in a form of a battery module, and then, connecting a plurality of battery modules in series, parallel, or parallel-series, and is accommodated in the box body 101. The battery 100 may further include other structures, for example, the battery 100 may also include a busbar component for achieving electrical connection between a plurality of cells 102.

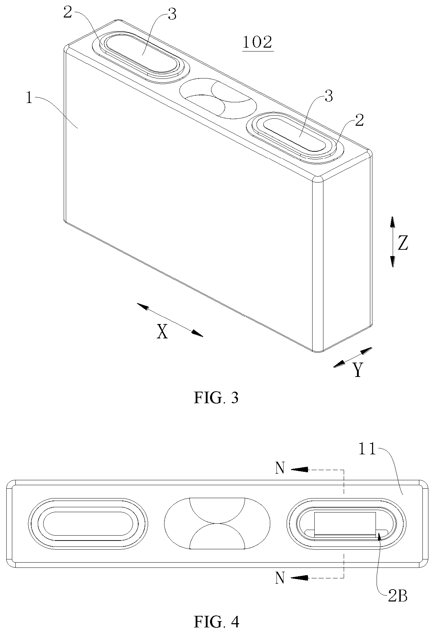

Each cell 102 may be a secondary cell or a primary cell, and may be a lithium-sulfur cell, a sodium-ion cell, or a magnesium-ion cell, but is not limited thereto. The cell 102 may be cylindrical, flat, cuboid, etc. For example, referring to the embodiment shown in FIG. 3, a length direction of the cell 102 is a first direction X, a width direction of the cell 102 is a second direction Y, a height direction of the cell 102 is a third direction Z, and every two of the first direction X, the second direction Y, and the third direction Z are perpendicular to each other.

According to some embodiments of this application, with reference to FIG. 4 to FIG. 6, the cell 102 includes a case 1 and a terminal body 2. The case 1 defines an accommodating cavity 1A. The terminal body 2 is arranged in the case 1. A liquid injection channel 2B configured to communicate the accommodating cavity 1A with an exterior of the case 1 is formed on the terminal body 2, and the liquid injection channel 2B includes an accommodating groove 21 and a through hole 28 running through a groove wall of the accommodating groove 21.

For example, the case 1 includes a first case wall 11. A side of the first case wall 11 facing the accommodating cavity 1A is an inner side, and a side of the first case wall 11 facing away from the accommodating cavity 1A is an outer side. The terminal body 2 is arranged on the first case wall 11. The liquid injection channel 2B configured to communicate the inner side with the outer side is formed on the terminal body 2. The liquid injection channel 2B includes the accommodating groove 21 and the through hole 28 running through a groove wall of the accommodating groove 21, so that the liquid injection channel 2B can communicate the inner side with the outer side, to meet a liquid injection requirement.

For example, if a groove opening of the accommodating groove 21 is open toward the outer side (that is, the groove opening of the accommodating groove 21 is located on a side of the accommodating groove 21 away from the accommodating cavity 1A), the accommodating groove 21 can communicate with the outer side. In this case, the through hole 28 can run through a groove wall on a side of the accommodating groove 21 close to the inner side to communicate with the inner side, thereby implementing communication between the inner side and the outer side by the liquid injection channel 2B. In another example, if a groove opening of the accommodating groove 21 is open toward the inner side (that is, the groove opening of the accommodating groove 21 is located on a side of the accommodating groove 21 close to the accommodating cavity 1A), the accommodating groove 21 can communicate with the inner side. In this case, the through hole 28 can run through a groove wall on a side of the accommodating groove 21 close to the outer side to communicate with the outer side, thereby implementing communication between the inner side and the outer side by the liquid injection channel 2B.

It may be understood that when an electrolytic solution is injected into the cell 102, the liquid injection channel 2B may be in a state of communicating the inner side with the outer side. After the liquid injection is completed, the liquid injection channel 2B may be sealed, so that the liquid injection channel 2B no longer communicates the inner side with the outer side, thereby avoiding leakage of the electrolytic solution from the liquid injection channel 2B.

It should be noted that an arrangement position of the terminal body 2 on the case 1 is not limited. For example, when liquid injection needs to performed on the cell 102, the cell 102 may be placed with the first case wall 11 located at the top of the case 1. In this case, the terminal body 2 and the liquid injection channel 2B on the terminal body 2 are both located at the top of the case 1. When an electrolytic solution is injected into the accommodating cavity 1A through the liquid injection channel 2B, the electrolytic solution flows downward into the accommodating cavity 1A after passing through the liquid injection channel 2B, thereby improving convenience of the liquid injection, and reducing a probability that the electrolytic solution overflows and spills out. Moreover, during operation of the cell 102, the liquid injection channel 2B can be sealed. In this case, the case 1 can be placed with the first case 1 located at any position of the case 1. For example, during operation of the cell 102, the first case wall 11 may be located at the top, the bottom, a side, or the like of the case 1.

It should be noted that a cross section of the through hole 28 may be in a shape of a circle, but not limited to a circle, or may be in another shape such as a polygon, an ellipse, or an oblong. In addition, when the through hole 28 is in a multi-segment form, cross sections of all segments of the through hole 28 may be circular, or a cross section of at least one segment of the through hole 28 is not circular.

In the cell 102 according to this embodiment of this application, the terminal body 2 is provided with the liquid injection channel 2B through which an electrolytic solution can be injected into the accommodating cavity 1A, to implement electrolytic solution injection from the terminal body 2. There is no need to provide the liquid injection channel 2B separately on the case 1 of the cell 102. Therefore, the liquid injection channel 2B does not separately occupy space of the case 1. The terminal body 2 does not need to be reduced in size to avoid the liquid injection channel 2B. Therefore, the area and the flow area of the terminal body 2 can be increased without increasing the size of the case 1, which facilitates reducing the flow resistance and improving the current passing efficiency of the cell 102. In addition, the area of the terminal body 2 is increased, which further facilitates assembly and connection between the terminal body 2 and the case 1. In addition, because the size of the case 1 does not need to be enlarged to enlarge the area of the terminal body 2, it is beneficial to miniaturization and lightweight of the case 1.

In addition, because there is no need to provide the liquid injection channel 2B separately on the case 1 of the cell 102 and perform special processing on the case 1, it is beneficial to reducing structural complexity and processing difficulty of the case 1. In addition, there is no need to thicken the case 1 partially for welding a sealing pin on the case 1, so that the structure and processing of the case 1 can be further simplified, and there is also no need to thicken the case 1 entirely for welding a sealing pin on the case 1, which, therefore, is conducive to meeting thinning and lightweight requirements of the case 1, is conducive to improving the energy density of the cell 102, and is conducive to reducing the weight and material costs of the case 1.

In addition, arranging the liquid injection channel 2B on the terminal body 2 facilitates manufacturing and processing of the liquid injection channel 2B, so that the size, the shape, and the like of the liquid injection channel 2B can easily meet design requirements and application requirements, which is conducive to reducing difficulty in processing the liquid injection channel 2B and reducing costs of the liquid injection channel 2B.

In addition, because the liquid injection channel 2B includes the accommodating groove 21 and the through hole 28 running through the groove wall of the accommodating groove 21, the liquid injection channel 2B can communicate the accommodating cavity 1A with the exterior of the case 1, thereby meeting a liquid injection requirement. In addition, because the liquid injection channel 2B includes the accommodating groove 21, the liquid injection channel 2B has a large buffer space, and can function to buffer the electrolytic solution to some extent, which is conducive to reducing the possibility of spilling and overflowing the electrolytic solution during liquid injection or use of the cell 102.

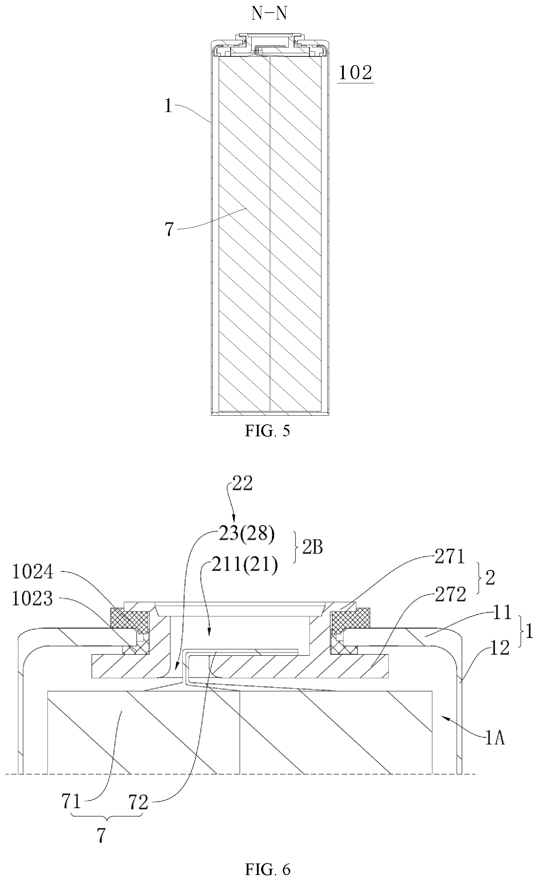

In some embodiments of this application, as shown in FIG. 6, the accommodating groove 21 includes a first accommodating groove 211 with a groove opening open toward a direction away from the accommodating cavity 1A, and the through hole 28 includes a liquid passage hole 23 running through a groove wall on a side of the first accommodating groove 211 close to the accommodating cavity 1A. In this way, when the electrolytic solution is injected into the cell 102, the electrolytic solution injected from the outer side of the first case wall 11 is first injected into the first accommodating groove 211 through the groove opening of the first accommodating groove 211, and the electrolytic solution entering the first accommodating groove 211 flows toward the inner side of the first case wall 11 through the liquid passage hole 23.

Therefore, the first accommodating groove 211 can function to buffer the electrolytic solution, to alleviate the problems, such as spilling and overflowing, of the electrolytic solution. In addition, the side wall of the first accommodating groove 211 (that is, a groove wall extending along a direction from the groove opening of the first accommodating groove 211 to the accommodating cavity 1A) may prevent the electrolytic solution from spilling out to some extent, thereby reducing contamination of the electrolytic solution to the outside, and facilitating rapid liquid injection. In addition, a liquid injection port can be flexibly arranged. For example, an outlet of the liquid injection port can be made large. For example, the outlet of the liquid injection port is arranged to match the groove opening of the first accommodating groove 211, which is conducive to further improving the liquid injection efficiency. Alternatively, in some optional embodiments, liquid injection may be performed by directly aligning the liquid injection port with the liquid passage hole 23, which is not limited herein.

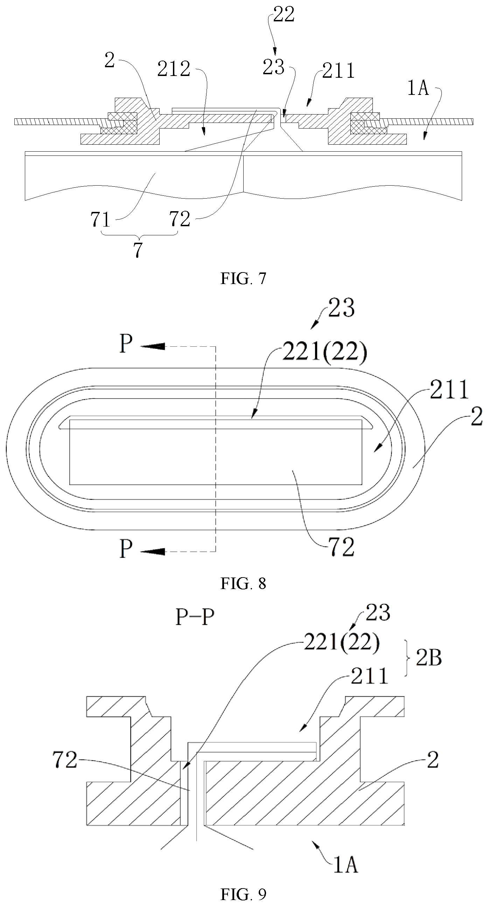

In some embodiments of this application, as shown in FIG. 7, the accommodating groove 21 further includes a second accommodating groove 212 with a groove opening open toward a direction facing the accommodating cavity 1A, the second accommodating groove 212 is located on a side of the first accommodating groove 211 close to the accommodating cavity 1A, and the liquid passage hole 23 runs through a groove wall on a side of the second accommodating groove 212 away from the accommodating cavity 1A to communicate the first accommodating groove 211 with the second accommodating groove 212.

That is, the second accommodating groove 212 is located on an inner side of the first accommodating groove 211, or the first accommodating groove 211 is located on an outer side of the second accommodating groove 212, or the first accommodating groove 211 and the second accommodating groove 212 are sequentially arranged along a direction from an outer side to an inner side. The liquid passage hole 23 is located between the second accommodating groove 212 and the first accommodating groove 211, and respectively runs through a groove wall of the second accommodating groove 212 and a groove wall of the first accommodating groove 211, to communicate the first accommodating groove 211 with the second accommodating groove 212.

In this way, when the electrolytic solution is injected into the cell 102, the electrolytic solution injected from the outer side of the first case wall 11 is first injected into the first accommodating groove 211 through the groove opening of the first accommodating groove 211, and the electrolytic solution entering the first accommodating groove 211 enters the second accommodating groove 212 through the liquid passage hole 23, and then flows toward the inner side of the first case wall 11 through the second accommodating groove 212.

Therefore, a gas generated in the accommodating cavity 1A or the electrolytic solution having a tendency to overflow can enter the second accommodating groove 212, and the second accommodating groove 212 can implement a buffer function, to improve the operational reliability of the cell 102. Specifically, during manufacturing, transportation, or use of the cell 102, if the electrolytic solution has a tendency to overflow, the electrolytic solution that is about to overflow can enter the second accommodating groove 212, thereby reducing a probability that the electrolytic solution overflows from the liquid injection channel 2B, which is conducive to alleviating the problem that the overflowing electrolytic solution contaminates components on the case 1, and is conducive to increasing a liquid injection speed during manufacturing, to improve reliability and manufacturability of the cell 102. In addition, during use of the cell 102, the electrolytic solution generates a gas after participating in a reaction, resulting in an increase in pressure inside the case 1. When the pressure reaches a specific degree, there is a reliability problem. When a gas is formed in the case 1, the second accommodating groove 212 that is additionally provided below the liquid passage hole 23 can function to buffer the gas, thereby alleviating the reliability problem caused by a pressure increase, and improving the use reliability of the cell 102.

In addition, arranging the second accommodating groove 212 can increase the height of the liquid passage hole 23 during liquid injection. When the injection height of the electrolytic solution is level with the lower end of the liquid passage hole 23, it is beneficial to increasing a total injection volume of the electrolytic solution and improving the cycle life of the cell 102. It may be understood that during use of the cell 102, consumption of the electrolytic solution reduces the electrolytic solution inside the cell 102, which affects the service life of the cell 102. Increasing a total injection amount of the electrolytic solution is conducive to prolonging the service life of the cell 102.

In addition, when the liquid passage hole 23 is sealed by a long sealing pin, because the height of the liquid passage hole 23 is high, the sealing pin protrudes from the bottom of the liquid passage hole 23 by a small length, or does not protrude from the bottom of the liquid passage hole 23, the sealing pin is unlikely to interfere with or be electrically connected to the battery core assembly 7 below the terminal body 2, so that a lower plastic structure below the terminal body 2 does not need to be thickened, which is conducive to thinning of the lower plastic structure and reducing material costs, is conducive to reducing space occupied by the lower plastic structure in the accommodating cavity 1A, and is conducive to improving the energy density of the cell 102.

In some embodiments of this application, a cross-sectional shape of the first accommodating groove 211 and/or a cross-sectional shape of the second accommodating groove 212 matches a cross-sectional shape of the terminal body 2. In this way, space of the terminal body 2 can be fully used to make a size of the first accommodating groove 211 and/or a size of the second accommodating groove 212 as large as possible, thereby facilitating improving functions, such as buffering and storage, of the first accommodating groove 211 and/or the second accommodating groove 212.

In some embodiments of this application, as shown in FIG. 6, the cell 102 includes a battery core assembly 7, where the battery core assembly 7 includes an active material coating portion 71 accommodated in the accommodating cavity 1A and a conductive portion 72 connected to the active material coating portion 71. For example, the conductive portion 72 can be connected to the terminal body 2 to form an electrical connection, to implement output of the battery core assembly 7 from an electrode at the terminal body 2. For example, the conductive portion 72 can be connected to the terminal body 2 by welding or the like. It may be understood that, the active material coating portion 71 may include a current collector coated with an active material layer, and the conductive portion 72 may include only a tab portion, or may include a tab portion, an adapter electrically connected to the tab portion, and the like. This is not limited herein.

As shown in FIG. 6, a communication hole 22 communicating the first accommodating groove 211 with the accommodating cavity 1A is formed on the terminal body 2. One or more communication holes 22 are provided, and the at least one communication hole 22 is used as the liquid passage hole 23. The conductive portion 72 is penetrated through the at least one communication hole 22 to be at least partially accommodated in the first accommodating groove 211. For example, the first accommodating groove 211 and the communication hole 22 are formed on the terminal body 2. The first accommodating groove 211 is open toward a direction away from the accommodating cavity 1A to communicate with the exterior of the case 1. The communication hole 22 is located on a side of the first accommodating groove 211 close to the accommodating cavity 1A. The communication hole 22 runs through a groove wall on the side of the first accommodating groove 211 close to the accommodating cavity 1A to communicate the first accommodating groove 211 with the accommodating cavity 1A. At least one communication hole 22 is a liquid passage hole 23. The conductive portion 72 may penetrate through a communication hole 22 used as a liquid passage hole 23 (that is, the communication hole 22 through which the conductive portion 72 is penetrated can still be used, after being penetrated through by the conductive portion 72, for the electrolytic solution to flow through) or may be penetrate through a communication hole 22 not used as a liquid passage hole 23 (that is, the communication hole 22 through which the conductive portion 72 is penetrated cannot be not used, after being penetrated through by the conductive portion 72, for the electrolytic solution to flow through).

Therefore, at least a part of the conductive portion 72 is accommodated in the first accommodating groove 211, so that the at least a part of the conductive portion 72 occupies space in the first accommodating groove 211, which can reduce space occupied by the conductive portion 72 in the accommodating cavity 1A, and save space in the accommodating cavity 1A to accommodate the active material coating portion 71 with a larger volume, which is conducive to improving the energy density of the cell 102, or reducing the size of the cell 102 without changing the energy density of the cell 102.

In some embodiments, as shown in FIG. 7, when the terminal body 2 is provided with a second accommodating groove 212, the communication hole 22 communicates the first accommodating groove 211 with the second accommodating groove 212, and at least one communication hole 22 is used as a liquid passage hole 23. The conductive portion 72 may also penetrate through the at least one communication hole 22 and extend into the first accommodating groove 211. In this case, the conductive portion 72 may penetrate through a communication hole 22 used as a liquid passage hole 23 (that is, the communication hole 22 through which the conductive portion 72 is penetrated can still be used, after being penetrated through by the conductive portion 72, for the electrolytic solution to flow through) or may be penetrate through a communication hole 22 not used as a liquid passage hole 23 (that is, the communication hole 22 through which the conductive portion 72 is penetrated cannot be not used, after being penetrated through by the conductive portion 72, for the electrolytic solution to pass through).

Therefore, at least a part of the conductive portion 72 is accommodated in the first accommodating groove 211, so that the at least a part of the conductive portion 72 occupies space in the first accommodating groove 211, which can reduce space occupied by the conductive portion 72 in the accommodating cavity 1A, and save space in the accommodating cavity 1A to accommodate the active material coating portion 71 with a larger volume, which is conducive to improving the energy density of the cell 102, or reducing the size of the cell 102 without changing the energy density of the cell 102.

In some embodiments, with reference to FIG. 8 and FIG. 9, the communication hole 22 through which the conductive portion 72 is penetrated is a first communication hole 221 (that is, at least one communication hole 22 is penetrated through by the conductive portion 72, and the communication hole 22 through which the conductive portion 72 is penetrated is a first communication hole 221), and at least the first communication hole 221 can be used as a liquid passage hole 23. In this way, when the terminal body 2 is provided with a first communication hole 221 through which the conductive portion 72 penetrates, regardless of whether the terminal body 2 is provided with a second communication hole 222, as described below, through which the conductive portion 72 is not penetrated, the first communication hole 221 through which the conductive portion 72 is penetrated has a liquid passage function, that is, after being penetrated through by the conductive portion 72, the first communication hole 221 still have a liquid passage gap. During liquid injection, after the electrolytic solution is injected into the first accommodating groove 211, at least a part of the electrolytic solution may flow into the accommodating cavity 1A from the first communication hole 221 through which the conductive portion 72 is penetrated.

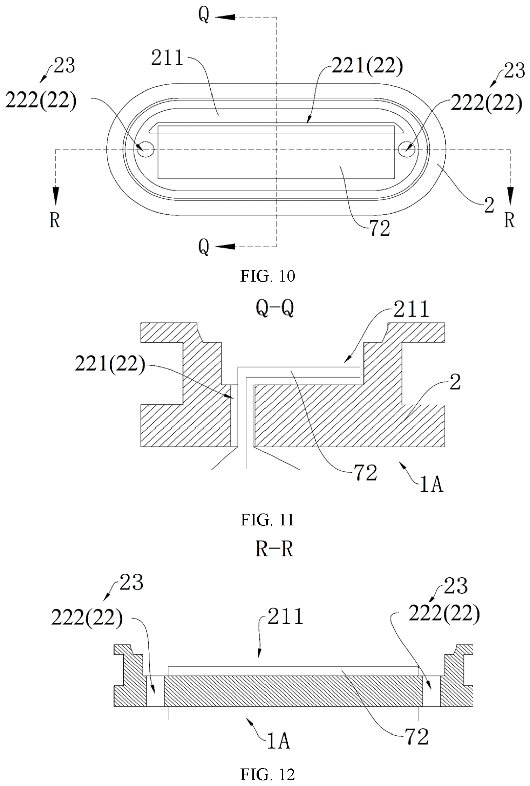

In some embodiments, with reference to FIG. 10 to FIG. 12, the communication hole 22 through which the conductive portion 72 is penetrated is a first communication hole 221. A plurality of communication holes 22 are provided and further include at least one second communication hole 222 through which the conductive portion 72 is not penetrated (that is, at least one communication hole 22 through which the conductive portion 72 is not penetrated, and the communication hole 22 through which the conductive portion 72 is not penetrated is a second communication hole 222), and at least the second communication hole 222 may be used as a liquid passage hole 23.

For example, when the first communication hole 221 also implements a liquid passage function (that is, the first communication hole 221 further has a liquid passage gap after being penetrated through by the conductive portion 72), both the first communication hole 221 and the second communication hole 222 are used as liquid passage holes 23. During liquid injection, after the electrolytic solution is injected into the first accommodating groove 211, a part of the electrolytic solution may flow into the accommodating cavity 1A from the first communication hole 221 through which the conductive portion 72 is penetrated, and a part of the electrolytic solution may flow into the accommodating cavity 1A from the second communication hole 222 through which the conductive portion 72 is not penetrated.

In another example, when the first communication hole 221 does not have a liquid passage function (that is, after the conductive portion 72 penetrates through the first communication hole 221, the communication hole 221 is sealed and cannot be passed through by a liquid), and only the second communication hole 222 is used as the liquid passage hole 23. During liquid injection, after the electrolytic solution is injected into the first accommodating groove 211, the electrolytic solution flows into the accommodating cavity 1A only from the second communication hole 222 through which the conductive portion 72 is not penetrated.

In this embodiment of this application, when at least the first communication hole 221 is used as the liquid passage hole 23, the first communication hole 221 also implements a liquid passage function, that is, after the conductive portion 72 is penetrated through the first communication hole 221, the first communication hole 221 can be used for the electrolytic solution to pass through. In this case, at least the first communication hole 221 can be used for the electrolytic solution to pass through, so that whether to further provide a communication hole 22 (for example, the second communication hole 222) through which the conductive portion 72 is not penetrated needs to be chosen based on requirements, which is conducive to reducing a total quantity of provided communication holes 22, thereby simplifying the structure and processing of the terminal body 2 and improving the structural strength of the terminal body 2.

In this embodiment of this application, when at least the second communication hole 222 is used as the liquid passage hole 23, at least the second communication hole 222 can be used for the electrolytic solution to pass through. In this case, there is no need to set a pore diameter of the first communication hole 221 or a quantity of first communication holes 221 to be larger for the electrolytic solution to pass through the first communication hole 221, there is also no need to set a size of the conductive portion 72 to be smaller for the electrolytic solution to pass through the first communication hole 221, and it is only needed to design the size of the first communication hole 221 to be slightly greater than the size of the conductive portion 72 to enable the conductive portion 72 to pass, which can alleviate the problem that impurities and the like fall into the accommodating cavity 1A from a gap between the conductive portion 72 and the first communication hole 221, can also alleviate the problem that partial strength of the terminal body 2 is weak due to an excessively large size of the first communication hole 221, and can also enlarge the size of the conductive portion 72, which is conducive to improving the current passing efficiency. In addition, because the electrolytic solution is not affected by the conductive portion 72 when the electrolytic solution passes through the second communication hole 222, the liquid injection efficiency can be improved, and the electrolytic solution is unlikely to cause problems, such as contamination and corrosion, to the conductive portion 72.

For example, in Example 1 of this application, there is at least one communication hole 22, and the conductive portion 72 is penetrated through each communication hole 22. Therefore, each communication hole 22 is a first communication hole 221. In this case, at least one first communication hole 221 forms a liquid passage hole 23, and after being injected into the first accommodating groove 211, the electrolytic solution flows from the first communication hole 221 through which the conductive portion 72 is penetrated into the accommodating cavity 1A.

For example, in Example 2 of this application, there are at least two communication holes 22, where at least one communication hole 22 is a first communication hole 221 through which the conductive portion 72 is penetrated, and at least one communication hole 22 is a second communication hole 222 through which the conductive portion 72 is not penetrated. In this case, both the first communication hole 221 and the second communication hole 222 form liquid passage holes 23. After the electrolytic solution is injected into the first accommodating groove 211, one part of the electrolytic solution flows into the accommodating cavity 1A from the first communication hole 221 through which the conductive portion 72 is penetrated, and the other part of the electrolytic solution flows into the accommodating cavity 1A from the second communication hole 222 through which the conductive portion 72 is not penetrated.

For example, in example 3 of this application, there are at least two communication holes 22, at least one communication hole 22 is a first communication hole 221 through which a conductive portion 72 is penetrated, and at least one communication hole 22 is a second communication hole 222 through which a conductive portion 72 is not penetrated. After the first communication hole 221 passes through the conductive portion 72, the first communication hole 221 is sealed and cannot be passed through by a liquid. In this case, only the second communication hole 222 forms a liquid passage hole 23, and after the electrolytic solution is injected into the first accommodating groove 211, the electrolytic solution flows from the second communication hole 222 through which a conductive portion 72 is not penetrated into the accommodating cavity 1A.

In some embodiments, with reference to FIG. 8 and FIG. 9, the terminal body 2 is formed into an elongated structure, and the communication hole 22 (that is, the first communication hole 221) through which the conductive portion 72 is penetrated is formed into an elongated hole whose length is greater than its width and whose length direction extends from one end of a length of the terminal body 2 to an other end of the length. Therefore, the space of the terminal body 2 can be fully used, to enlarge, as much as possible, the length of the first communication hole 221, so that the first communication hole 221 can be penetrated by a conductive portion 72 with a larger size. Therefore, it is beneficial to increase the size of the conductive portion 72, thereby improving the current passing efficiency. When the first communication hole 221 is used as the liquid passage hole 23, the length of the first communication hole 221 is enlarged, which is further conducive to improving the liquid injection efficiency.

In some embodiments, when the communication hole 22 through which the conductive portion 72 is penetrated is the first communication hole 221, there are a plurality of first communication holes 221 and a plurality of conductive portions 72, and each first communication hole 221 is penetrated through by at least one conductive portion 72. In this case, at least two communication holes 22 are respectively penetrated through by conductive portions 72, to alleviate the problem of weak partial strength of the terminal body 2 due to a large size of a single first communication hole 221. In addition, if the first communication hole 221 is used as a liquid passage hole 23, the quantity of the first communication holes 221 is increased, which is conducive to improving liquid injection efficiency.

For example, when the first communication hole 221 is formed as an elongated hole whose length is greater than its width and whose length direction extends from one end of a length of the terminal body 2 to an other end of the length, a plurality of first communication holes 221 may be arranged at intervals along a width direction of the terminal body 2. In this way, space above the terminal body 2 can be fully used, and the problem that partial strength of the terminal body 2 is weak due to a large size of a single first communication hole 221 can be alleviated. In addition, if the first communication hole 221 is used as a liquid passage hole 23, increasing a quantity of first communication holes 221 further helps improve liquid injection efficiency.

In some embodiments, with reference to FIG. 10, when the terminal body 2 is provided with both a first communication hole 221 and a second communication hole 222, if the first communication hole 221 is formed as an elongated hole whose length is greater than its width and whose length direction extends from one end of a length of the terminal body 2 to an other end of the length, the second communication hole 222 may be arranged at at least one of two ends of a length of the first communication hole 221, to make full use of space, thereby enlarging the size of the second communication hole 222 as much as possible while improving structural strength of the terminal body 2, to improve liquid injection efficiency. In addition, when second communication holes 222 are provided at both ends of a length of the first communication hole 221, the liquid injection efficiency can be further improved, a size of each second communication hole 222 can be reduced, and the problem of partial weakness of the terminal body 2 can be alleviated.

Certainly, in this embodiment of this application, the shape of the first communication hole 221 and the relative positional relationship between the first communication hole 221 and the second communication hole 222 are not limited to the foregoing descriptions, and can be adjusted according to an actual situation.

It should be noted that, as shown in FIG. 10, the liquid passage hole 23 may be staggered (that is, does not overlap) with a connecting portion (for example, a weld mark) formed by connecting the conductive portion 72 to the terminal body 2. In this way, the electrolytic solution injected into the first accommodating groove 211 may not be blocked by the connecting portion, and is smoothly injected into the accommodating cavity 1A through the liquid passage hole 23, thereby improving liquid injection efficiency.

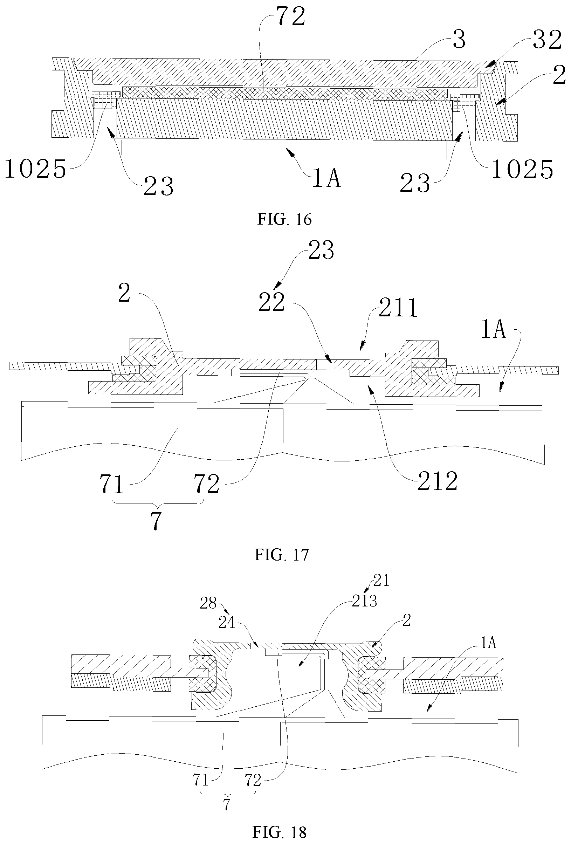

Certainly, this application is not limited to this. In another embodiment of this application, as shown in FIG. 17, the conductive portion 72 may not penetrate through the communication hole 22 and does not extend into the first accommodating groove 211. In this case, the conductive portion 72 can be connected to a wall surface on a side of the terminal body 2 facing the accommodating cavity 1A, to make the conductive portion 72 entirely located on a side of the first accommodating groove 211 close to the accommodating cavity 1A. In this case, each communication hole 22 may be used as a liquid passage hole 23. Therefore, when entering the first accommodating groove 211, the electrolytic solution does not come into contact with a connecting portion (for example, a weld mark) formed by connecting the conductive portion 72 to the terminal body 2, to reduce contamination and corrosion caused by the injected electrolytic solution to the connecting portion between the conductive portion 72 and the terminal body 2.

For example, when the terminal body 2 is provided with a second accommodating groove 212, as shown in FIG. 17, the conductive portion 72 may not penetrate through the communication hole 22 to be entirely located on a side of the first accommodating groove 211 close to the accommodating cavity 1A. For example, the conductive portion 72 is connected to a wall surface on a side of the terminal body 2 facing the accommodating cavity 1A, so that the conductive portion 72 is connected to a groove wall (for example, a groove top wall of the second accommodating groove 212) on a side of the second accommodating groove 212 away from the accommodating cavity 1A. In this case, at least a part of the conductive portion 72 may be accommodated in the second accommodating groove 212, which can reduce space occupied by the conductive portion 72 in the accommodating cavity 1A can be reduced, and save space in the accommodating cavity 1A to accommodate the active material coating portion 71 with a larger volume, which is conducive to improving the energy density of the cell 102, or reducing the size of the cell 102 without changing the energy density of the cell 102.

In addition, when the terminal body 2 is provided with a second accommodating groove 212, and the conductive portion 72 is connected to a wall surface on a side of the terminal body 2 facing the accommodating cavity 1A, each communication hole 22 may be used as a liquid passage hole 23. Therefore, when entering the first accommodating groove 211, the electrolytic solution does not come into contact with a connecting portion (for example, a weld mark) formed between the conductive portion 72 and the terminal body 2 in the second accommodating groove 212, to reduce contamination and corrosion caused by the injected electrolytic solution to the connecting portion between the conductive portion 72 and the terminal body 2.

In some embodiments of this application, as shown in FIG. 10, the terminal body 2 is formed into an elongated structure, and the first accommodating groove 211 is formed into an elongated groove. That is, a length of the first accommodating groove 211 is greater than its width, and a length direction of the first accommodating groove 211 extends from one end of a length of the terminal body 2 to an other end of the length, which is conducive to fully using space of the terminal body 2, to enlarge the size of the first accommodating groove 211, improve the liquid injection efficiency, and facilitate the flared design of the liquid injection port. For example, the outlet end of the liquid injection port is arranged to match the groove opening of the first accommodating groove 211, which is conducive to further improving the liquid injection efficiency.

In some embodiments of this application, a groove wall on a side of the first accommodating groove 211 close to the accommodating cavity 1A may be set to be a slope obliquely extending downward toward a direction of the liquid passage hole 23, to help the electrolytic solution in the first accommodating groove 211 quickly flow toward a direction of the liquid passage hole 23, which improves liquid injection efficiency, and can alleviate the problem of liquid accumulation in the first accommodating groove 211.

In some embodiments of this application, a cross-sectional shape of the terminal body 2 may be set to match a cross-sectional shape of the first accommodating groove 211, to make full use of space and enlarge a size of the first accommodating groove 211 as much as possible, thereby improving a buffer amount of the first accommodating groove 211.

In some embodiments of this application, when the first accommodating groove 211 is formed as an elongated groove, for example, a cross-sectional shape of the first accommodating groove 211 may be set to an oblong shape, a rectangular shape, an elliptic shape, or the like, to implement flexible setting. The oblong shape may also be referred to as a racetrack shape, formed by splicing two ends of a length of a rectangle respectively with semicircles.

In some embodiments of this application, a groove opening of the first accommodating groove 211 is in a flared form. That is, the groove opening of the first accommodating groove 211 is gradually enlarged toward a direction away from the accommodating cavity 1A. Therefore, matching between the first accommodating groove 211 and the liquid injection port is facilitated, so that the liquid injection port can conveniently extend into the groove opening of the first accommodating groove 211, and the liquid injection port can be limited, thereby improving the matching stability between the liquid injection port and the groove opening of the first accommodating groove 211, and reducing a probability of liquid leakage during liquid injection.

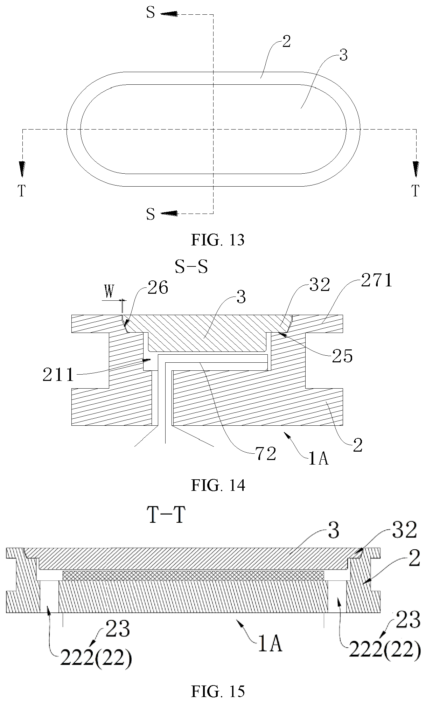

In some embodiments of this application, with reference to FIG. 13 to FIG. 15, the cell 102 further includes: a terminal cover plate 3, where the terminal cover plate 3 covers the terminal body 2 and seals the groove opening of the first accommodating groove 211. In this way, after the liquid injection, a terminal cover plate 3 can be configured to cover the terminal body 2, to use the terminal cover plate 3 to seal the groove opening of the first accommodating groove 211 on the terminal body 2, so that the liquid injection channel 2B is in a sealed state, the electrolytic solution is prevented from spilling out, and external foreign matter is prevented from entering the cell 102, thereby improving reliability of the cell 102.

It should be noted that, the terminal cover plate 3 is a holeless cover plate, thereby ensuring reliability of sealing. In addition, it should be noted that a material of the terminal cover plate 3 is not limited, and the terminal cover plate 3 may be a single material piece, for example, an aluminum cover plate, or may be a composite material piece, for example, a copper-aluminum composite cover plate. Details are not described herein.

In addition, it should be noted that when the accommodating groove 21 includes the first accommodating groove 211 with a groove opening open outward, the liquid passage hole 23 may be arranged on a side of the first accommodating groove 211 close to the accommodating cavity 1A, and runs through a groove wall on a side of the first accommodating groove 211 close to the accommodating cavity 1A. In this case, the first accommodating groove 211 is equivalent to a sinking structure, so that the liquid passage hole 23 is away from the groove opening of the first accommodating groove 211, and the liquid passage hole 23 is farther away from a connecting point between the terminal cover plate 3 and the terminal body 2. When an electrolytic solution overflows from the liquid passage hole 23, the overflowing electrolytic solution is unlikely to come into contact with the connecting point (for example, welding or bonding) between the terminal body 2 and the terminal cover plate 3, which can reduce corrosion and contamination to the connection point.

In some embodiments, when the terminal body 2 is formed into an elongated structure, the terminal cover plate 3 may be configured as an elongated cover plate, which is conducive shape matching between the terminal body 2 and the terminal cover plate 3 for full cooperation, facilitates enlarging an area of the terminal cover plate 3, and facilitates assembly and connection between the terminal cover plate 3 and the terminal body 2. For example, the shape of the terminal cover plate 3 may be an oblong, a rectangle, an ellipse, or the like. The oblong shape may also be referred to as a racetrack shape, formed by splicing two ends of a length of a rectangle respectively with semicircles.

It may be understood that, the terminal cover plate 3 is located on an outer side (that is, a side away from the accommodating cavity 1A) of at least a part of the terminal body 2, to present a form in which the terminal cover plate 3 covers the terminal body 2. A manner of assembling the terminal cover plate 3 and the terminal body 2 is not limited. For example, the terminal cover plate 3 may be completely located on an outer side of the terminal body 2 (that is, a side away from the accommodating cavity 1A), or a part of the terminal cover plate 3 may be embedded in the terminal body 2.

In some embodiments of this application, as shown in FIG. 13 to FIG. 15, at least a part of the terminal cover plate 3 is embedded in the first accommodating groove 211. Therefore, at least a part of the terminal cover plate 3 is embedded in the first accommodating groove 211, so that space occupied by the terminal cover plate 3 outside the terminal body 2 can be reduced, thereby improving structural compactness.

For example, an empty cavity is formed between the terminal cover plate 3 and the well wall of the first accommodating groove 211. In this way, during use of the cell 102, the empty cavity may be configured to buffer a gas generated in the cell 102 or an electrolytic solution overflowing from the accommodating cavity 1A, which is conducive to improving the operational reliability of the cell 102.

In some embodiments of this application, as shown in FIG. 13 to FIG. 15, an edge of the terminal cover plate 3 has an overlapping portion 32, and the overlapping portion 32 overlaps a side of the terminal body 2 away from the accommodating cavity 1A. Therefore, matching and connection between the terminal cover plate 3 and the terminal body 2 are facilitated. In addition, when the overlapping portion 32 is used for welding to the terminal body 2, and the terminal body 2 is provided with a liquid passage hole 23, the overlapping portion 32 may be away from the liquid passage hole 23. When the electrolytic solution overflows through the liquid passage hole 23, the electrolytic solution can be away from a welding position between the overlapping portion 32 and the terminal body 2, thereby alleviating the problems, such as corrosion and contamination, caused to the welding position. In addition, it is easy to implement that there is an empty cavity between the terminal cover plate 3 and the groove wall of the first accommodating groove 211.

For example, as shown in FIG. 13 to FIG. 15, a surface on a side of the terminal body 2 away from the accommodating cavity 1A has a sink 25 arranged around the first accommodating groove 211, and at least a part of the overlapping portion 32 is embedded in the sink 25, so that the overlapping portion 32 overlaps a side of the terminal body 2 away from the accommodating cavity 1A. Therefore, the sink 25 may be used to implement a positioning function, thereby improving assembly efficiency between the terminal body 2 and the terminal cover plate 3. In addition, the sink 25 may be used to implement a limiting function to some extent, thereby improving stability and reliability of the matching between the terminal body 2 and the terminal cover plate 3. In addition, by arranging the sink 25, the terminal cover plate 3 can be further embedded into the terminal body 2, so that the terminal cover plate 3 protrudes less or does not protrude from the terminal body 2, which is conducive to reducing space occupied outside the terminal body 2.

In some embodiments of this application, as shown in FIG. 14, a fitting gap 26 is provided between the overlapping portion 32 and a side wall of the sink 25, and a dimension W of the fitting gap 26 at an end away from the accommodating cavity 1A is less than 0.05 mm. That is, the fitting gap 26 is greater than 0 mm and less than 0.05 mm. Therefore, the overlapping portion 32 of the terminal cover plate 3 can be smoothly assembled with the sink 25 of the terminal body 2, and in addition, the fitting gap between 26 the overlapping portion 32 and the terminal body 2 is not excessively large. When the overlapping portion 32 and the terminal body 2 are connected by welding, a welding yield between the overlapping portion 32 and the terminal body 2 can be improved. It should be noted that a manner of welding the overlapping portion 32 and the terminal body 2 is not limited. For example, hot melt welding or brazing may be used. For example, continuous laser welding may be used for welding the overlapping portion 32 and the terminal body 2.

In some embodiments of this application, a shape of the terminal cover plate 3 matches a cross-sectional shape of the first accommodating groove 211, and a cross-sectional shape of the overlapping portion 32 matches a cross-sectional shape of the sink 25, thereby well ensuring that the fitting gap 26 between the overlapping portion 32 and the side wall of the sink 25 is uniform.

In some embodiments of this application, as shown in FIG. 6 and FIG. 14, the terminal body 2 may include an outer stopper 271 performing stopping and limiting outside the case 1, and an inner stopper 272 performing stopping and limiting inside the case 1. The overlapping portion 32 overlaps the outer stopper 271, and the terminal body 2 is riveted to the case 1 to form the outer stopper 271. That is, the terminal body 2 is fixed to the case 1 by riveting, and the outer stopper 271 is formed after the terminal body 2 is riveted. That is, before the terminal body 2 is riveted, the terminal body 2 does not have the outer stopper 271, and after the terminal body 2 is riveted, the outer stopper 271 can be formed. For example, the terminal body 2 may be first formed through a stamping and forming process, and then the terminal body 2 is fixed to the case 1 by riveting.

Therefore, preliminary processing (for example, a stamping process) of the terminal body 2 before riveting can be simplified, to conveniently obtain the outer stopper 271. When a structure of the outer stopper 271 is complex, a mold (such as a stamping mold) for preliminary processing of the terminal body 2 can be simplified, thereby reducing production costs. In addition, the terminal body 2 riveted to the case 1 may be an integrally formed member, so that the terminal body 2 can be reliably connected to the case 1, and the connection between the outer stopper 271 and the inner stopper 272 is stable and reliable, which is conducive to improving reliability of the connection between the terminal body 2 and the terminal cover plate 3.

Certainly, this application is not limited thereto. For example, in another embodiment, the inner stopper 272 may also be processed by riveting. Alternatively, in another embodiment, the terminal body 2 may also be obtained through another process other than riveting. For example, the terminal body 2 may be divided into two parts and connected by welding to be fixed to the case 1.

For example, as shown in FIG. 6, the cell 102 may further include a sealing gasket 1023 (for example, a sealing ring) and an insulation gasket 1024 (for example, a plastic gasket). The sealing gasket 1023 and the insulation gasket 1024 are sandwiched between the terminal body 2 and the case 1, and the terminal body 2 is riveted to the case 1, so that the sealing gasket 1023 and the insulation gasket 1024 are fixed between the terminal body 2 and the case 1, thereby improving production efficiency, and avoiding adverse thermal impact caused by a welding process on the sealing gasket 1023 and the insulation gasket 1024. For example, during the riveting, a compression amount (that is, a difference between a thickness of the sealing gasket 1023 after deformation and a thickness of the sealing gasket 1023 before the deformation divided by the thickness of the sealing gasket 1023 before the deformation) of the sealing gasket 1023 may be greater than or equal to %, to ensure the sealing.

In some embodiments, the terminal body 2 does not have a part stopped on an outer side (that is, a side away from the accommodating cavity 1A) of the terminal cover plate 3, so that the terminal cover plate 3 is suitable for being mounted to the terminal body 2 from the outer side (that is, the side away from the accommodating cavity 1A) of the terminal body 2. In this way, the terminal cover plate 3 is set to be mounted to the terminal body 2 from the outer side of the terminal body 2, to seal the groove opening of the first accommodating groove 211, so that the terminal cover plate 3 is mounted after liquid injection. In this way, the sealing can be ensured, and a mounting position is close to the outer side, which facilitates quick assembly of the terminal cover plate 3.

In some embodiments of this application, because the terminal cover plate 3 can seal the groove opening of the first accommodating groove 211, the liquid passage hole 23 may not be separately sealed according to requirements, thereby simplifying sealing, improving production efficiency, and reducing production costs. However, this application is not limited thereto. For example, in another embodiment of this application, a first sealing structure 1025 may also be arranged while arranging the terminal cover plate 3, to seal the liquid passage hole 23, thereby improving sealing reliability of the liquid injection channel 2B. In addition, in some other embodiments of this application, when the first sealing structure 1025 is arranged, the terminal cover plate 3 may not be arranged.

For example, in some embodiments, the first sealing structure 1025 may be constructed to be at least partially embedded in the liquid passage hole 23, and the first sealing structure 1025 is in an interference fit with the liquid passage hole 23 and seals the liquid passage hole 23. Therefore, the first sealing structure 1025 is fixed through an interference fit, which is conducive to quick mounting of the first sealing structure 1025, and is conducive to improving reliability of sealing the liquid passage hole 23 by the first sealing structure 1025. Certainly, this application is not limited thereto. For example, in another embodiment, alternatively, the first sealing structure 1025 may be set in a non-detachable form such as welding or riveting, or a detachable form such as threaded connection or twist-on connection, which is not limited herein. In addition, to facilitate mounting of the first sealing structure 1025, the liquid passage hole 23 may be set in a flared form or the like.

In this embodiment of this application, the accommodating groove 21 may alternatively not include a first accommodating groove 211 open toward a direction away from the accommodating cavity 1A. For example, in some embodiments, as shown in FIG. 18, the accommodating groove 21 includes a third accommodating groove 213 with a groove opening open toward a direction away from the accommodating cavity 1A, and the through hole 28 includes an injection hole 24 running through a groove wall on a side of the third accommodating groove 213 away from the accommodating cavity 1A. That is, the injection hole 24 is located on an outer side of the third accommodating groove 213 and runs through a groove wall on a side of the third accommodating groove 213 close to the outer side. In this way, when the electrolytic solution is injected into the cell 102, the electrolytic solution injected from the outer side of the terminal body 2 enters the third accommodating groove 213 through the injection hole 24, and then flows toward the accommodating cavity 1A through the groove opening of the third accommodating groove 213. Therefore, the third accommodating groove 213 can function to buffer the electrolytic solution, and a side wall of the third accommodating groove 213 can prevent the electrolytic solution from spilling out, to facilitate rapid liquid injection.

In addition, the height of the injection hole 24 may be increased. When the injection hole 24 is blocked, a gas generated in the accommodating cavity 1A or the electrolytic solution can enter the third accommodating groove 213, and the third accommodating groove 213 can implement a buffer function, to improve the operational reliability of the cell 102. In addition, when the injection hole 24 is sealed by a long sealing pin, because the height of the injection hole 24 is high, the sealing pin protrudes from the bottom of the injection hole 24 by a small length, or does not protrude from the bottom of the injection hole 24, the sealing pin is unlikely to interfere with the battery core assembly 7 in the accommodating cavity 1A, or a lower plastic structure below the terminal body 2 does not need to be thickened to avoid interference between the sealing pin and the battery core assembly 7, which is conducive to thinning of the lower plastic structure and reducing material costs, can reduce space occupied by the lower plastic structure in the accommodating cavity 1A, and is conducive to improving the energy density of the cell 102.

In addition, when the injection height of the electrolytic solution is level with the lower end of the injection hole 24, because the third accommodating groove 213 is further provided below the injection hole 24, the injection height of the electrolytic solution can be increased, which is conducive to increasing the total injection amount of the electrolytic solution, thereby improving the cycle life of the cell 102.

In some embodiments, as shown in FIG. 18, the cell 102 includes a battery core assembly 7, where the battery core assembly 7 includes an active material coating portion 71 accommodated in the accommodating cavity 1A and a conductive portion 72 connected to the active material coating portion 71; and at least a part of the conductive portion 72 is accommodated in the third accommodating groove 213 and is connected to a groove wall on a side of the third accommodating groove 213 away from the accommodating cavity 1A. Therefore, because at least a part of the conductive portion 72 can be accommodated in the third accommodating groove 213, which can reduce space occupied by the conductive portion 72 in the accommodating cavity 1A, and save space in the accommodating cavity 1A to accommodate the active material coating portion 71 with a larger volume, which is conducive to improving the energy density of the cell 102, or reducing the size of the cell 102 without changing the energy density of the cell 102.

It should be noted that, as shown in FIG. 18, the injection hole 24 may be staggered (that is, does not overlap) with a connecting portion (for example, a weld mark) formed by connecting the conductive portion 72 to the terminal body 2. In this way, when the electrolytic solution is injected into the third accommodating groove 213 from the injection hole 24, the electrolytic solution is not blocked by the connecting portion, and can smoothly enter the third accommodating groove 213 and then, enter the accommodating cavity 1A, which is conducive to improving liquid injection efficiency.

For example, the terminal body 2 is formed into an elongated structure, and the third accommodating groove 213 is formed into an elongated groove. That is, a length of the third accommodating groove 213 is greater than its width, and a length direction of the third accommodating groove 213 extends from one end of a length of the terminal body 2 to an other end of the length, which is conducive to fully using space of the terminal body 2, to enlarge the size of the third accommodating groove 213, and improve the liquid injection efficiency. In some embodiments of this application, a cross-sectional shape of the terminal body 2 may be set to match a cross-sectional shape of the third accommodating groove 213, to make full use of space and enlarge a size of the third accommodating groove 213 as much as possible, thereby improving a buffer amount of the third accommodating groove 213.

In this embodiment of this application, a relative positional relationship between the injection hole 24 and the terminal body 2 is not limited. For example, the injection hole 24 may be centrally arranged relative to the terminal body 2, or the injection hole 24 may be eccentrically arranged relative to the terminal body 2. For example, the injection hole 24 is eccentrically arranged in the length direction of the terminal body 2. To be specific, the injection hole 24 is located on a side of a central point of the terminal body 2 in the length direction of the terminal body 2. In this way, the injection hole 24 can avoid, as much as possible, a region in which the conductive portion 72 is connected to the terminal body 2, thereby reducing contamination and corrosion caused by the injected electrolytic solution to a connecting portion (for example, a weld mark) formed between the conductive portion 72 and the terminal body 2. In addition, the size of the conductive portion 72 can be relatively large, so that the conductive portion 72 is easily connected to the terminal body 2, and has high current passing efficiency.

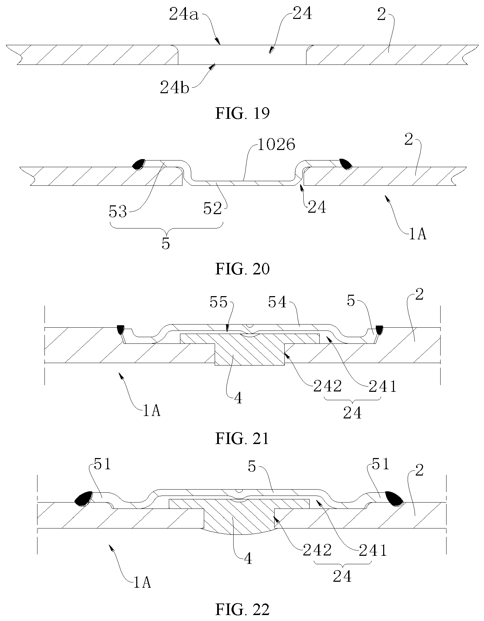

In some embodiments of this application, as shown in FIG. 19, a flow area at a liquid inlet end 24a of the injection hole 24 is greater than a flow area at a liquid outlet end 24b of the injection hole 24. When the electrolytic solution is injected into the injection hole 24, the electrolytic solution flows in a direction from the liquid inlet end 24a to the liquid outlet end 24b, setting the flow area at the liquid inlet end 24a of the injection hole 24 to be greater than a flow area at the liquid outlet end 24b of the injection hole 24 is conducive to improving the liquid injection efficiency and alleviates the problem of electrolytic solution overflow. In addition, when the injection hole 24 matches the liquid injection port, because the flow area at the liquid inlet end 24a of the injection hole 24 is larger, which facilitates injecting the liquid injection port into the injection hole 24, thereby helping improve the liquid injection efficiency.

In some embodiments of this application, as shown in FIG. 20, the cell 102 further includes a second sealing structure 1026, where the second sealing structure 1026 seals the injection hole 24. Therefore, the second sealing structure 1026 is arranged to seal the injection hole 24, so that the liquid injection channel 2B can be sealed, the electrolytic solution is prevented from spilling out, and external foreign matter is prevented from entering the cell 102, thereby improving reliability of the cell 102. In addition, when the flow area at the liquid inlet end 24a of the injection hole 24 is greater than the flow area at the liquid outlet end 24b of the injection hole 24, quick assembly between the second sealing structure 1026 and the injection hole 24 is further facilitated.

For example, in some embodiments, the second sealing structure 1026 may be constructed to be at least partially embedded in the injection hole 24, and the second sealing structure 1026 is in an interference fit with the injection hole 24 and seals the injection hole 24. Therefore, the second sealing structure 1026 is fixed through an interference fit, which is conducive to quick mounting of the second sealing structure 1026, and is conducive to improving reliability of sealing the injection hole 24 by the second sealing structure 1026. Certainly, this application is not limited thereto. For example, in another embodiment, alternatively, the second sealing structure 1026 may be set in a non-detachable form such as welding or riveting, or a detachable form such as threaded connection or twist-on connection, which is not limited herein. In addition, to facilitate mounting of the second sealing structure 1026, the injection hole 24 may be set in a flared form or the like.

In some embodiments of this application, structures of the first sealing structure 1025 and the second sealing structure 1026 may be the same or different, for example, may both be set as set sealing structures. Shapes of the liquid passage hole 23 and the injection hole 24 may also be the same or different, for example, may both be set as set holes.

In some embodiments, the set sealing structure (such as the first sealing structure 1025 and the second sealing structure 1026) may be in a detachable form, or may be in a non-detachable fixed form. For example, when the set sealing structure is in a detachable form, it is beneficial to maintaining the set hole (for example, the liquid passage hole 23 or the injection hole 24). For example, when the electrolytic solution needs to be supplemented, the set sealing structure may be disassembled, the set hole is opened, and the electrolytic solution is supplemented and injected, and then the set sealing structure is returned. For example, the set sealing structure may be detachably connected to the terminal body 2 by threads or screws, to facilitate disassembly. For example, as shown in FIG. 20, when the set sealing structure is in a non-detachable fixed form, the set sealing structure may be fixed to the terminal body 2 by welding, riveting, or the like, thereby improving reliability of sealing the set hole by the set sealing structure.

In some embodiments, at least a part of the set sealing structure (such as the first sealing structure 1025 and the second sealing structure 1026) is embedded in the set hole (such as the liquid passage hole 23 or the injection hole 24). That is, the set sealing structure may be entirely embedded in the set hole, or only a part of the set sealing structure may be embedded in the set hole. Therefore, space inside the set hole can be fully used, and reliability of sealing the set hole by the set sealing structure can be improved, and in addition, a height by which the set sealing structure protrudes from the set hole can be reduced, to reduce space occupied by the set sealing structure outside the terminal body 2, which is conducive to reducing an overall size of the cell 102.

In some embodiments of this application, as shown in FIG. 21, the set sealing structure may include a first sealing member 4. At least a part of the first sealing member 4 is embedded in the set hole and has an interference fit with the set hole, to seal the set hole. Therefore, the first sealing member 4 is fixed through an interference fit, which is conducive to quick mounting of the first sealing member 4, and is conducive to improving reliability of sealing the set hole by the first sealing member 4.

In some embodiments of this application, the set sealing structure may include a second sealing member 5, where the second sealing member 5 covers an inlet end of the set hole and is connected to the terminal body 2. Specifically, "the second sealing member 5 covers an inlet end of the set hole" needs to be understood in a broad sense. That is, the second sealing member 5 is arranged at an outer side of the inlet end, or may be embedded in the inlet end, as long as the second sealing member 5 is located near the inlet end and covers the inlet end. Therefore, sealing can be performed from a source (that is, the inlet end) of the set hole, thereby reducing a probability that foreign matter contaminates the set hole. In addition, the second sealing member 5 overs the inlet end of the set hole, which facilitates quick assembly of the second sealing member 5, and improves assembly efficiency of the second sealing member 5.

Specifically, a manner of matching between the second sealing member 5 and the terminal body 2 is not limited. For example, in some embodiments, an edge of the second sealing member 5 may overlap the exterior of the terminal body 2 (that is, the edge of the second sealing member 5 overlaps a side of the terminal body 2 away from the accommodating cavity 1A) and/or at least a part of the second sealing member 5 is embedded in the set hole, and the second sealing member 5 cooperates with the terminal body 2 by welding and sealing. Therefore, assembly and positioning of the second sealing member 5 are facilitated by overlapping and/or embedding, and the sealing connection between the second sealing member 5 and the terminal body 2 is implemented by welding, so that reliability of the sealing connection between the second sealing member 5 and the terminal body 2 can be improved.

In some embodiments, the set hole includes a first hole segment 241 and a second hole segment 242 that are sequentially arranged along a flow direction of liquid injection. A diameter of the first hole segment 241 is greater than a diameter of the second hole segment 242, that is, a flow area of any cross section of the first hole segment 241 is greater than a flow area of any cross section of the second hole segment 242. At least a part of the second sealing member 5 is embedded in the first hole segment 241 and covers the second hole segment 242.

In the foregoing technical solution, because the part of the second sealing member 5 embedded in the first hole segment 241 can cover the second hole segment 242, reliable sealing on the set hole can be implemented. In addition, because the diameter of the first hole segment 241 is large, the second sealing member 5 is at least embedded in the first hole segment 241, thereby facilitating assembly and positioning of the second sealing member 5, helping omit a positioning jig and the like used for connection, and facilitating connection between the second sealing member 5 and the terminal body 2. In addition, space outside the terminal body 2 occupied by the second sealing member 5 can be reduced, thereby helping reduce an overall size of the cell 102.

In some embodiments, as shown in FIG. 21, an edge of the second sealing member 5 is in sealing connection with a hole wall of the first hole segment 241. In the foregoing technical solution, the edge of the second sealing member 5 is in sealing connection with the hole wall of the first hole segment 241, to indicate that the second sealing member 5 can be completely accommodated inside the first hole segment 241 in a radial direction of the first hole segment 241, thereby helping further reduce space occupied by the second sealing member 5 outside the terminal body 2, and improving compactness of cooperation between the second sealing member 5 and the terminal body 2. In addition, stability and reliability of the connection between the second sealing member 5 and the terminal body 2 can be improved by performing stopping and limiting on the edge of the second sealing member 5 by using the hole wall of the first hole segment 241. For example, the second sealing member 5 may further be completely sunk into the first hole segment 241 in the axial direction of the first hole segment 241, which is beneficial to further reducing space occupied by the second sealing member 5 outside the terminal body 2.

In some embodiments, as shown in FIG. 22, the second sealing member 5 includes an extending portion 51. The extending portion 51 extends beyond the first hole segment 241, and overlaps and is in sealing connection to a surface on a side of the terminal body 2 facing away from the accommodating cavity 1A. Therefore, a size of the extending portion 51 in a radial direction of the first hole segment 241 can be enlarged as required, to facilitate enlarging a sealing-connection area between the second sealing member 5 and the terminal body 2, thereby improving reliability of the sealing connection between the second sealing member 5 and the terminal body 2. In addition, a requirement on a shape of the first hole segment 241 is low, and the edge of the second sealing member 5 and the hole wall of the first hole segment 241 do not need to achieve shape matching and meet required gap fitting. Therefore, the processing precision of the terminal body 2 and the second sealing member 5 is reduced, the production efficiency is improved, and the production costs are reduced.

In some embodiments, as shown in FIG. 21 and FIG. 22, the set hole forms a step surface at a connection between the first hole segment 241 and the second hole segment 242, and a part of the second sealing member 5 embedded in the first hole segment 241 is supported on the step surface. Therefore, connection stability between the second sealing member 5 and the terminal body 2 can be improved.

In some embodiments, the set sealing structure includes both the first sealing member 4 and the second sealing member 5. The first sealing member 4 is in an interference sealing fit with the second hole segment 242 (that is, the first sealing member 4 seals the second hole segment 242 by an interference fit with the second hole segment 242), and is located on a side of the second sealing member 5 close to the accommodating cavity 1A. In the foregoing technical solution, the set sealing structure includes both the first sealing member 4 and the second sealing member 5, and the second sealing member 5 can prevent the first sealing member 4 from exiting the set hole, thereby improving reliability of the sealing fit between the first sealing member 4 and the second hole segment 242, and further improving sealing reliability of the entire set sealing structure for the set hole. Therefore, the first sealing member 4 is fixed through an interference fit, which is conducive to quick mounting of the first sealing member 4.

In addition, when the first hole segment 241 is set in the foregoing form in which "a flow area of the first hole segment 241 gradually decreases or does not change along a direction from the first hole segment 241 to the second hole segment 242, and a flow area at an outlet end of the first hole segment 241 is greater than or equal to a flow area at an inlet end of the second hole segment 242", it is beneficial to assembly and connection of the second sealing member 5.

In some embodiments, as shown in FIG. 21 and FIG. 22, the second sealing member 5 includes an avoidance portion 54 protruding in a direction away from the first sealing member 4, and an avoidance cavity 55 is formed on a side of the avoidance portion 54 facing the first sealing member 4, and a portion of the first sealing member 4 extends into the avoidance cavity 55. In the foregoing technical solution, compactness of cooperation between the first sealing member 4 and the second sealing member 5 can be improved, occupation and waste of space are reduced, and a volume of the cell 102 is reduced. In addition, the second sealing member 5 is in a concave-convex form, so that structural strength of the second sealing member 5 can be improved, and reliability and stability of cooperation between the second sealing member 5 and the terminal body 2 can be improved.

In some embodiments of this application, as shown in FIG. 21 and FIG. 22, the set sealing structure includes both a first sealing member 4 and a second sealing member 5. At least a part of the first sealing member 4 is embedded in a set hole and has an interference fit with the set hole to seal the set hole. An edge of the second sealing member 5 overlaps the exterior of the terminal body 2 (with reference to FIG. 22, that is, the edge of the second sealing member 5 overlaps a side of the terminal body 2 away from the accommodating cavity 1A) and/or at least a part of the second sealing member 5 is embedded in a set hole (with reference to FIG. 21 and FIG. 22). The second sealing member 5 is in a welding and sealing fit with the terminal body 2, and the second sealing member 5 is located on a side of the first sealing member 4 away from the accommodating cavity 1A. In this way, the first sealing member 4 can implement a function of effectively sealing the set hole, and the second sealing member 5 not only can have a function of sealing the set hole, but also can have a function of preventing the first sealing member 4 from falling out of the set hole, thereby improving reliability of sealing the set hole by the set sealing structure.

For example, the first sealing member 4 may be made of a material such as plastic or rubber, to facilitate the interference fit and improve a sealing effect.

For example, the second sealing member 5 may be of a metal material the same as that of the terminal body 2, for example, may be of an aluminum material, thereby helping improve the yield of welding between the second sealing member 5 and the terminal body 2. In addition, it should be noted that, a manner of welding the second sealing member 5 to the terminal body 2 is not limited. For example, hot melt welding or brazing may be used. For example, pulse laser welding may be used, to improve the manufacturing efficiency and automation.

In some embodiments of this application, the electrolytic solution is injected from the liquid injection channel 2B of the terminal body 2, and the electrolytic solution enters the case 1 of the cell 102 from the liquid injection channel 2B. It is unnecessary to arrange another auxiliary structure below the liquid injection channel 2B, so that a structure can be simplified, and costs can be reduced. After the liquid injection is completed, the first sealing member 4 is first loaded into the set hole, to implement pre-sealing. Then, the second sealing member 5 is loaded into the set hole, and then, the second sealing member 5 is welded to the terminal body 2, to implement tight sealing. Alternatively, after the liquid injection is completed, the terminal cover plate 3 is directly welded to the terminal body 2. Alternatively, after the liquid injection is completed, the first sealing member 4 and the second sealing member 5 are first loaded into the set hole, and then the terminal cover plate 3 is welded to the terminal body 2 after welding between the second sealing member 5 and the terminal body 2 is completed. In addition, when the conductive portion 72 needs to penetrate through the first communication hole 221, the conductive portion 72 is first penetrated and welding is performed between the conductive portion 72 and the terminal body 2, and then the electrolytic solution is injected.

In some embodiments of this application, with reference to FIG. 21, the set hole includes a first hole segment 241 and a second hole segment 242. That is, in some embodiments, the set hole includes at least the first hole segment 241 and the second hole segment 242. The first hole segment 241 is located upstream of the second hole segment 242 along a flow direction of liquid injection. A flow area of the first hole segment 241 gradually decreases or does not change along the direction from the first hole segment 241 to the second hole segment 242. A flow area of the second hole segment 242 gradually decreases or does not change along the direction from the first hole segment 241 to the second hole segment 242. A flow area at an outlet end of the first hole segment 241 is greater than or equal to a flow area at an inlet end of the second hole segment 242.

Therefore, when being injected into the set hole, the electrolytic solution first flows through the first hole segment 241 and then flows through the second hole segment 242. Because a flow area of the first hole segment 241 gradually decreases or does not change along the direction from the first hole segment 241 to the second hole segment 242, a flow area of the second hole segment 242 gradually decreases or does not change along the direction from the first hole segment 241 to the second hole segment 242, and a flow area at an outlet end of the first hole segment 241 is greater than or equal to a flow area at an inlet end of the second hole segment 242, the first hole segment 241 can function to buffer the electrolytic solution, which is conducive to improving the liquid injection efficiency and lowering a risk that the electrolytic solution spills out or overflows.

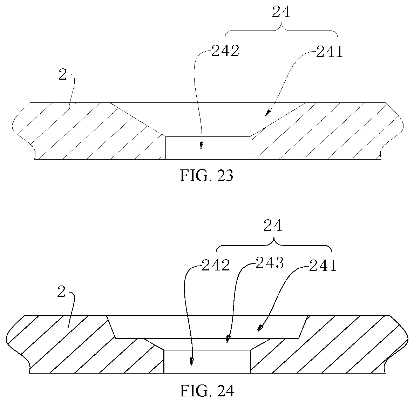

In some embodiments of this application, with reference to FIG. 23, the set hole is formed by a first hole segment 241 and a second hole segment 242, that is, the set hole includes only two hole segments: the first hole segment 241 and the second hole segment 242. A flow area of the first hole segment 241 gradually decreases in a direction from the first hole segment 241 to the second hole segment 242. A flow area at an outlet end of the first hole segment 241 is equal to a flow area at an inlet end of the second hole segment 242.

Therefore, the set hole is of a two-segment type, and the first hole segment 241 has a generally funneled shape. The side wall of the first hole segment 241 may have a flow guide function, so that the electrolytic solution entering the first hole segment 241 may quickly flow in the direction of the second hole segment 242, thereby improving the liquid injection efficiency. In addition, because a flow area at an outlet end of the first hole segment 241 is equal to a flow area at an inlet end of the second hole segment 242, a step surface is not formed between the first hole segment 241 and the second hole segment 242, which, in combination with the funneled shape of the first hole segment 241, makes it uneasy to form liquid accumulation in the first hole segment 241.

In some embodiments of this application, with reference to FIG. 24, the set hole further includes a third hole segment 243. The third hole segment 243 is located between the first hole segment 241 and the second hole segment 242 along the flow direction of liquid injection. A flow area of the third hole segment 243 gradually decreases along a direction from the first hole segment 241 to the second hole segment 242. A flow area at an inlet end of the third hole segment 243 is less than or equal to a flow area at an outlet end of the first hole segment 241. A flow area at an outlet end of the third hole segment 243 is equal to a flow area at an inlet end of the second hole segment 242.

Therefore, when the electrolytic solution is injected into the set hole, the electrolytic solution first flows through the first hole segment 241, then flows through the third hole segment 243, and then flows through the second hole segment 242. A flow area at an inlet end of the third hole segment 243 is less than or equal to a flow area at an outlet end of the first hole segment 241. Therefore, it indicates that the flow area of the first hole segment 241 is larger. The first hole segment 241 may function to buffer the electrolytic solution, which helps improve the liquid injection efficiency and reduce a risk that the electrolytic solution spills out or overflows. In addition, because the flow area of the third hole segment 243 gradually decreases in a direction from the first hole segment 241 to the second hole segment 242, the third hole segment 243 has a generally funneled shape, and a side wall of the third hole segment 243 may have a flow guide function, so that the electrolytic solution entering the third hole segment 243 can quickly flow toward a direction of the second hole section 242. In addition, because a flow area at an outlet end of the third hole segment 243 is equal to a flow area at an inlet end of the second hole segment 242, a step surface is not formed between the third hole segment 243 and the second hole segment 242, which, in combination with the funneled shape of the third hole segment 243, makes it uneasy to form liquid accumulation in the third hole segment 243.

In some embodiments, as shown in FIG. 20, the second sealing member 5 may include a central portion 52 and an edge portion 53 arranged around the central portion 52. The central portion 52 is embedded in the set hole, and the edge portion 53 overlaps and is in sealing connection to a part surrounding the set hole on a wall surface on a side of the terminal body 2 away from the accommodating cavity 1A. Therefore, a requirement on the shape of the set hole is low, and the terminal body 2 does not need to be thick for processing the set hole into a complex shape, so that the terminal body 2 can be thinned. In addition, the positioning cooperation between the second sealing member 5 and the terminal body 2 is stable, which is beneficial to improving stability and reliability of the connection between the second sealing member 5 and the terminal body 2. In addition, the cooperation between the second sealing member 5 and the terminal body 2 is compact, which is beneficial to saving space. In addition, the manner in which the second sealing member 5 overlaps and connected to the terminal body 2 facilitates quick connection between the second sealing member 5 and the terminal body 2.

It should be noted that the set sealing structure may include only the first sealing member 4, or may include only the second sealing member 5, or may include both the first sealing member 4 and the second sealing member 5. In the foregoing embodiments, when it is not described that the set sealing structure includes both the first sealing member 4 and the second sealing member 5, it may be specifically selected, according to a requirement, whether the first sealing member 4 or the second sealing member 5 is separately arranged, or both the first sealing member 4 and the second sealing member 5 are arranged. This is not limited herein.

It should be noted that laser welding has a high requirement on the cleanliness of the set hole. If there is residual electrolytic solution in the set hole, the electrolytic solution is easily prone to gasification under heat. Exhaust gas generated through gasification may rush out of a weld pool, causing defects, such as a pinhole and an explosion point, at a welding position. The liquid injection hole is set as follows: When the set hole is formed by the first hole segment 241 and the second hole segment 242, that is, the set hole includes only two hole segments: the first hole segment 241 and the second hole segment 242, a flow area of the first hole segment 241 gradually decreases along a direction from the first hole segment 241 to the second hole segment 242, and a flow area at an outlet end of the first hole segment 241 is equal to a flow area at an inlet end of the second hole segment 242, or the set hole further includes a third hole segment 243, the third hole segment 243 is located between the first hole segment 241 and the second hole segment 242 along a flow direction of liquid injection, a flow area of the third hole segment 243 gradually decreases along a direction from the first hole segment 241 to the second hole segment 242, a flow area at an inlet end of the third hole segment 243 is less than or equal to a flow area at an outlet end of the first hole segment 421, and a flow area at an outlet end of the third hole segment 243 is equal to a flow area at an inlet end of the second hole segment 242, because the liquid accumulation problem of the set hole can be alleviated, it is conducive to improving the yield of welding between the second sealing member 5 and the terminal body 2, and improving the sealing.

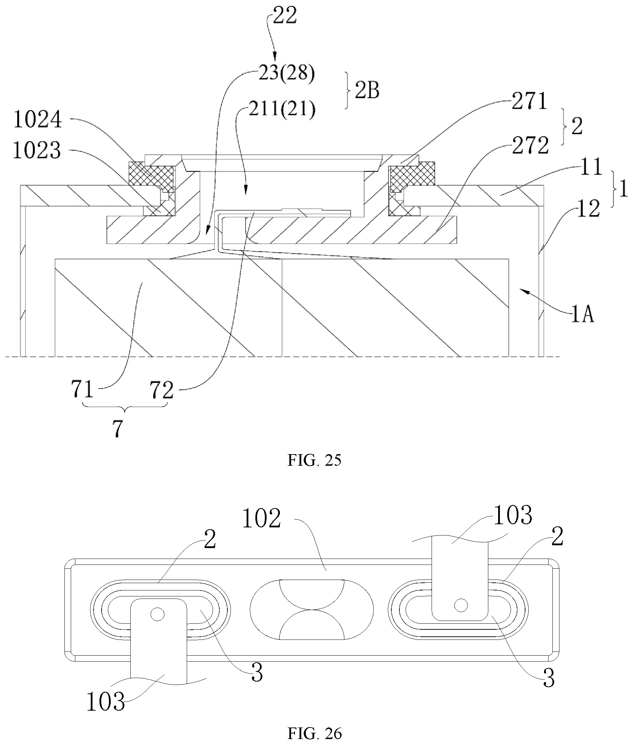

In some embodiments of this application, as shown in FIG. 6, the case 1 includes a first case wall 11, and the terminal body 2 is arranged on the first case wall 11. As shown in FIG. 6, the first case wall 11 and at least one second case wall 12 are integrally formed, and the second case wall 12 extends toward a side in a thickness direction of the first case wall 11. Alternatively, as shown in FIG. 25, the first case wall 11 is an integrally formed cover plate. Therefore, the position of the terminal body 2 can be flexibly designed, to broaden the application range of the cell 102 according to this embodiment of this application.

It should be noted that, the second case wall 12 may extend out of an edge of the first case wall 11. When the first case wall 11 is rectangular, at least one of four edges of the first case wall 11 may extend out of the second case wall 12. For example, only one edge of the first case wall 11 extends out of the second case wall 12, only two edges of the first case wall 11 respectively extend out of the second case wall 12, three edges of the first case wall 11 respectively extend out of the second case wall 12, and all four edges of the first case wall 11 extend out of the second case wall 12. For example, when the case 1 is a rectangular case, any wall surface of the rectangular case may be used as the first case wall 11.

For example, the case 1 may include a case body and a cover plate. The case body defines a space that is open on one side, and the cover plate is arranged on the open side of the case body, to form the accommodating cavity 1A between the case body and the cover plate. In this case, a wall surface of the case body corresponding to the cover plate is the first case wall 11, a wall surface of the case body connected between the first case wall 11 and the cover plate is the second case wall 12, or a wall surface of the case body corresponding to the cover plate is the second case wall 12, a wall surface of the case body connected between the second case wall 12 and the cover plate is the first case wall 11, or the cover plate is the first case wall 11.

According to some embodiments of this application, with reference to FIG. 2 and FIG. 26, this application further provides a battery 100, including a busbar component 103 and a cell 102 according to any one of the foregoing solutions. There are a plurality of cells 102, and at least two cells 102 are electrically connected by the busbar component 103. Therefore, the plurality of cells 102 may be connected in series and/or connected in parallel. Because the performance and manufacturability of the cell 102 according to this embodiment of this application are both improved, it is conducive to improving the performance and manufacturability of the battery 100. It should be noted that the battery 100 according to this embodiment of this application may include a box 101 or may not include a box 101.

For example, when a plurality of cells 102 is connected in series, a terminal cover plate 3 of an anode of one cell 102 is connected to a terminal cover plate 3 of a cathode of a next cell 102 by one busbar component 103, and at the same time, a terminal cover plate 3 of a cathode of the cell 102 is connected to a terminal cover plate 3 of an anode of a previous cell 102 by another busbar component 103.

According to a third aspect, an embodiment of this application further provides an electric device, including the battery 100 according to any one of the foregoing solutions.

According to some embodiments of the present application, the present application also provides an electrical device, including a battery 100 in any one of the above solutions, and the battery 100 is used to provide electrical energy to the electrical device. The electrical device can be any of the aforementioned equipment or systems that use battery 100. Because performance of the battery 100 is improved, it is beneficial to improving the operational power performance of the electric device.

The following describes a cell 102 according to a specific embodiment of this application.

Referring to FIG. 3 to FIG. 6, the cell 102 includes a case 1, a terminal body 2, a terminal cover plate 3, and a battery core assembly 7. The case 1 defines an accommodating cavity 1A. The terminal body 2 is arranged on the case 1. A liquid injection channel 2B configured to communicate the accommodating cavity 1A with an exterior of the case 1 is formed on the terminal body 2. The liquid injection channel 2B includes a first accommodating groove 211 and a liquid passage hole 23. A groove opening of the first accommodating groove 211 is open toward a direction away from the accommodating cavity 1A. A communication hole 22 communicating the first accommodating groove 211 with the accommodating cavity 1A is formed on the terminal body 2. One or more communication holes 22 are provided, and at least one communication hole 22 is used as the liquid passage hole 23. The terminal cover plate 3 is a holeless cover plate and covers the terminal body 2 and is configured to seal the groove opening of the first accommodating groove 211.

The battery core assembly 7 includes an active material coating portion 71 and a conductive portion 72. The active material coating portion 71 is accommodated in the accommodating cavity 1A. The conductive portion 72 connects the active material coating portion 71 and the terminal body 2. The conductive portion 72 is penetrated through the at least one communication hole 22 to be at least partially accommodated in the first accommodating groove 211. The part of the conductive portion 72 located in the first accommodating groove 211 is welded to the terminal body 2.

During manufacturing of the cell 102, the conductive portion 72 is first penetrated through the communication hole 22 of the terminal body 2, to implement welding between the conductive portion 72 and the terminal body 2. Then, the electrolytic solution is injected into the first accommodating groove 211. The electrolytic solution injected into the first accommodating groove 211 enters the case 1 through the liquid passage hole 23. After the liquid injection is completed, the terminal cover plate 3 covers and is welded to the terminal body 2, to implement tight sealing.

It should be noted that the embodiments in this application and features in the embodiments may be mutually combined in a case that no conflict occurs.

The foregoing descriptions are merely preferred embodiments of this application, but are not intended to limit this application. For a person skilled in the art, this application may have various modifications and changes. Any modification, equivalent replacement, or improvement made without departing from the spirit and principle of this application shall fall within the protection scope of this application.

## Claims

1. A cell, comprising:
a case, defining an accommodating cavity; and
a terminal body, arranged in the case, wherein a liquid injection channel configured to communicate the accommodating cavity with an exterior of the case is formed on the terminal body, and the liquid injection channel comprises an accommodating groove and a through hole running through a groove wall of the accommodating groove.

2. The cell according to claim 1, wherein the accommodating groove comprises a first accommodating groove with a groove opening open toward a direction away from the accommodating cavity, and the through hole comprises a liquid passage hole running through a groove wall on a side of the first accommodating groove close to the accommodating cavity.

3. The cell according to claim 2, wherein the accommodating groove further comprises a second accommodating groove with a groove opening open toward a direction facing the accommodating cavity, the second accommodating groove is located on a side of the first accommodating groove close to the accommodating cavity, and the liquid passage hole runs through a groove wall on a side of the second accommodating groove away from the accommodating cavity to communicate the first accommodating groove with the second accommodating groove.

4. The cell according to claim 2 or 3, wherein the cell comprises a battery core assembly, wherein the battery core assembly comprises an active material coating portion accommodated in the accommodating cavity and a conductive portion connected to the active material coating portion; a communication hole communicating the first accommodating groove with the accommodating cavity is formed on the terminal body; one or more communication holes are provided, and the at least one communication hole is used as the liquid passage hole; and the conductive portion is penetrated through the at least one communication hole to be at least partially accommodated in the first accommodating groove.

5. The cell according to claim 4, wherein the communication hole through which the conductive portion is penetrated is a first communication hole, and the first communication hole is used as the liquid passage hole.

6. The cell according to claim 4, wherein the communication hole through which the conductive portion is penetrated is a first communication hole, a plurality of communication holes are provided and further comprise at least one second communication hole through which the conductive portion is not penetrated, and at least the second communication hole is used as the liquid passage hole.

7. The cell according to any one of claims 4 to 6, wherein the terminal body is formed into an elongated structure, and the communication hole through which the conductive portion is penetrated is formed into an elongated hole whose length direction extends from one end of a length of the terminal body to an other end of the length.

8. The cell according to claim 2 or 3, wherein the cell comprises a battery core assembly, wherein the battery core assembly comprises an active material coating portion accommodated in the accommodating cavity and a conductive portion connected to the active material coating portion; a communication hole communicating the first accommodating groove with the accommodating cavity is formed on the terminal body; one or more communication holes are provided, and the at least one communication hole is used as the liquid passage hole; and the conductive portion is connected to a wall surface on a side of the terminal body facing the accommodating cavity.

9. The cell according to any one of claims 2 to 8, wherein the terminal body is formed into an elongated structure, and the first accommodating groove is formed into an elongated groove whose length direction extends from one end of a length of the terminal body to an other end of the length.

10. The cell according to any one of claims 2 to 9, wherein a groove opening of the first accommodating groove is in a flared form.

11. The cell according to any one of claims 2 to 10, further comprising:
a terminal cover plate, wherein the terminal cover plate covers the terminal body and seals the groove opening of the first accommodating groove.

12. The cell according to claim 11, wherein at least a part of the terminal cover plate is embedded in the first accommodating groove.

13. The cell according to claim 11 or 12, wherein an edge of the terminal cover plate has an overlapping portion, and the overlapping portion overlaps a side of the terminal body away from the accommodating cavity.

14. The cell according to claim 13, wherein a surface on a side of the terminal body away from the accommodating cavity has a sink arranged around the first accommodating groove, and at least a part of the overlapping portion is embedded in the sink.

15. The cell according to claim 14, wherein a fitting gap is provided between the overlapping portion and a side wall of the sink, and a dimension of the fitting gap at an end away from the accommodating cavity is less than 0.05 mm.

16. The cell according to any one of claims 2 to 15, further comprising:
a first sealing structure, wherein the first sealing structure seals the liquid passage hole.

17. The cell according to claim 1, wherein the accommodating groove comprises a third accommodating groove with a groove opening open toward a direction away from the accommodating cavity, and the through hole comprises an injection hole running through a groove wall on a side of the third accommodating groove away from the accommodating cavity.

18. The cell according to claim 17, wherein a flow area at a liquid inlet end of the injection hole is greater than a flow area at a liquid outlet end of the injection hole.

19. The cell according to claim 17 or 18, further comprising:
a second sealing structure, wherein the second sealing structure seals the injection hole.

20. The cell according to any one of claims 17 to 19, wherein the cell comprises a battery core assembly, wherein the battery core assembly comprises an active material coating portion accommodated in the accommodating cavity and a conductive portion connected to the active material coating portion; and at least a part of the conductive portion is accommodated in the third accommodating groove and is connected to a groove wall on a side of the third accommodating groove away from the accommodating cavity.

21. The cell according to any one of claims 1 to 20, wherein the case comprises a first case wall, and the terminal body is arranged on the first case wall, wherein the first case wall is an integrally formed cover plate, or the first case wall and at least one second case wall are integrally formed, and the second case wall extends toward a side in a thickness direction of the first case wall.

22. A battery, comprising a busbar component and the cell according to any one of claims 1 to 21, wherein a plurality of cells are provided, and at least two cells are electrically connected by the busbar component.

23. An electric device, comprising the battery according to claim 22.
